# EUROPEAN PATENT SPECIFICATION

(11) **EP 1 718 448 B1**
(45) Date of publication and mention of the grant of the patent: **17.07.2013**
(21) Application number: 05708316.4
(22) Date of filing: 11.02.2005
(51) Int. Cl.: B29B 17/00, B29B 13/02, B09B 3/00, B29C 39/00

(54) **TREATMENT OF PLASTIC WASTE**
BEHANDLUNG VON KUNSTSTOFFABFALL
TRAITEMENT DES DECHETS PLASTIQUES

(30) Priority: 13.02.2004 GB 0403269
(43) Date of publication of application: 08.11.2006
(73) Proprietor: Styromelt Ltd., Cardiff South Glamorgan CF23 8RS (GB)
(72) Inventor: Scheeres, David J., Cosheston, Pembrokeshire SA72 4SF (GB)
(74) Representative: Baker, Thomas Edward
(86) International application number: PCT/GB2005/000493
(87) International publication number: WO 2005/080060

(56) References cited:
- WO-A-91/07264
- FR-A- 2 715 852
- GB-A- 2 297 553
- US-A- 4 091 967
- US-A- 4 308 447
- US-A- 5 240 656
- US-A- 5 470 521
- US-A- 5 814 790
- PATENT ABSTRACTS OF JAPAN vol. 011, no. 131 (M-584), 24 April 1987 (1987-04-24) & JP 61 273913 A (MORUTON KK), 4 December 1986 (1986-12-04)
- PATENT ABSTRACTS OF JAPAN vol. 005, no. 083 (M-071), 30 May 1981 (1981-05-30) & JP 56 030822 A (WATANABE TOSHIRO; others: 05), 28 March 1981 (1981-03-28)
- PATENT ABSTRACTS OF JAPAN vol. 016, no. 425 (C-0982), 7 September 1992 (1992-09-07) & JP 04 146750 A (JANOME SEWING MACH CO LTD; others: 01), 20 May 1992 (1992-05-20)
- PATENT ABSTRACTS OF JAPAN vol. 1995, no. 05, 30 June 1995 (1995-06-30) & JP 07 040345 A (IWAKUNI SEISAKUSHO:KK), 10 February 1995 (1995-02-10)
- PATENT ABSTRACTS OF JAPAN vol. 018, no. 528 (C-1258), 6 October 1994 (1994-10-06) & JP 06 184351 A (YAMAMOTO MFG CO LTD), 5 July 1994 (1994-07-05)

## Description

This invention relates to the treatment, disposal or management of waste, in particular waste plastics.

Plastics in one form or another enters into almost every aspect of our daily lives. Expanded polystyrene (EPS) which is well known and used for its insulation and shock absorbent properties because it has the characteristics of 3 to 7% solids and 95 to 99% air or blowing agent is encountered in fast food restaurants as clam shell containers for hamburgers and drinks cups, as plates and trays in sandwich bars and fish and chip shops, as pizza trays, as agricultural containers for seeds and plants; as alternative disposable cups and plates etc., to conventional crockery, as cups at vending machines as yoghurt and frozen yoghurt pots, as boxes to transport certain perishable foods such as fish and eggs, as fruit trays, and as protective packaging for a wide range of goods such as telephones, so-called white goods, e.g. refrigerators and cookers, and televisions.

The consumption of plastics cups alone, mainly from vending machines, has reached some 3,000,000 per day in the UK and 60,000,000 per day in the U.S.A. where, in one factory with around 500 staff, it was ascertained that as many as 3000 cups were consumed in one day.

Other plastics materials which are in common use are as follows:- polyethylene which as high density and low density polyethylene (PE) is used for containers such as refuse sacks, carrier bags and even specialist containers such as blood and plastic containers and as expanded polyethylene (EPE) is used in film or in sheet form for protective wrapping and packaging easily damaged items in the electronics glass, china and furnishing industries; polystyrene (PS), high impact polystyrene (HIPS) which is used for making cutlery and some kinds of beverage cups; Oriented polystyrene (OPS) as used in the packaging catering and confectionary industry polyvinylchloride (PVC) which is somewhat clear and is used for packaging and wrapping films and for containers such as blister type packages for articles of various kinds; ABS which is used for many kinds of containers such as cups, yoghurt pots and butter and margarine containers; polypropylene (PP) which can be very clear and is used in general packaging where a clear view of the packaged article is required without discoloration, eg for food containers as the container covers and for packaging clothing such as shirts, and other articles such as sheets and curtains, and expanded polypropylene (EPP) which is used for its insulation and impact resistance properties as say end blocks for transporting computers and for automobile bumpers or fenders.

In fast food restaurants the consumption of plastics is monumental, and represents a considerable problem. Staff have to be diverted away from profitable work to empty the waste containers which can cost up to £60 per hour. Moreover, it has become the vogue in USA for a dinner party, picnic or barbecue, to avoid any washing up to have total replacement plastics so that all that needs to be done after the meal is to wrap up everything in a plastics table cloth and throw away to the garbage bin.

With the increased security measures now placed upon airlines post September 11, 2001 the use of plastic utensils on flights has increased dramatically. Accordingly, airlines are also producing considerably more plastics waste nowadays and this also needs to be disposed of appropriately.

Whilst plastics and articles made therefrom are relatively inexpensive to manufacture, are inert and do not contribute towards the continuing destruction of our natural timber resources as does the production of paper, plastics are increasingly being given a bad press because of the problems plastics waste causes to the environment. The advantages of the inertness of plastics become disadvantageous when it comes to their disposal as the plastics does not dissolve in the ground or otherwise biodegrade. Incineration is not the answer because of the emission of "greenhouse" gases and the danger of emission of noxious gases, if carbonization occurs which can require the cost prohibitive installation of suitable filtration equipment.

The search for a satisfactory biodegradable plastics has still not been really successful. Currently available biodegradable plastics reduce shelf life which encourage waste and consumption and generally are starch based around a plastics "skeleton" anyway. In any event, there has been no reliable body of evidence that biodegradable plastics will not harm the environment. An all too familiar sight nowadays is the presence of waste plastics in the environment, presenting a hazard to wild life and being a continual eyesore. It is blown around our towns and cities, into the parks, about the countryside; it is present at the seaside and on the beaches, it floats in the seas and oceans and can end up in places which have not hitherto been visited by human beings. Imagine that 200,000 tons of waste EPC would cover the surface of the world to a depth of one foot.

The principal method of disposing of plastics waste is by burying in landfill sites. In the UK alone, it is estimated that around 3 million tonnes of waste plastics is buried each year in landfill sites around the country. Approximately 5% by weight and 50% by volume is attributed to EPS. In an untreated state, backfilling "raw EPS" consumes a site's capacity inefficiently and deems the landfill site useless for all but the most basic of uses. Obviously, building on such landfill sites cannot be entertained because of the danger of subsidence. Moreover, landfill sites are becoming increasingly remote from the points of refuse collection, thereby further increasing transportation costs.

Moreover, because of its high volume to low weight ratio (particularly EPS products) the cost of transporting plastics waste to landfill sites, is enormous. The human resource and the amount of fossil fuels consumed in transportation are high and the latter also contributes in no small way to environmental pollution. Moreover, sites available for landfill are becoming increasingly scarce. In countries such as Germany where the geological structure prohibits landfill (the underlying rock is very near the surface) the waste plastics to be disposed of by landfill has to be transported to another country, e.g. France, where landfill is possible and sites are available. In Japan 85% of the people live on 10% of the land, so incineration wins over landfill as the waste plastics treatment of choice.

And, if nothing is done, the situation can only get worse because the population of the world has grown from around 2.5 billion in 1948 to around 6 billion at this time - in 2004 - and is now increasing by about 83 million each year. It has been stated that to satisfy the needs and expectations of this population explosion, the Earth's natural resources and species are being destroyed and polluted on a scale which is now threatening the very life support systems of our planet. The havoc being inflicted on our habitat ranges from damage to the ozone layer, to destruction of the tropical rain forests; from pollution of land and water to desertification and the wholesale extinction of animal and plant species.

Due to environmental pressure, there is a backlash against the use of plastics which is beginning to cause its replacement by paper and cardboard in certain areas, eg. egg boxes, plates, cups, and clam shell containers. One industry in which replacement has begun in the USA is in the fast food industry. However, this is environmentally unsound as the more paper and cardboard that is used the greater is the depletion of our natural timber resources. And contrary to popular belief, paper and cardboard does not readily biodegrade, particularly in dry conditions which can be encountered in some landfill sites and the affect of printing inks on the environment has still not been fully assessed. Indeed, the leachate released from paper and cardboard degradation in landfill sites could pollute water supplies and create methane gas with its attendant problems. All around there is a growing environmental pressure, not only to find replacement materials for plastics which will not pollute the environment and to step up research into biodegradable plastics, but also to dispose of the enormous volume of plastics waste in a more efficient and environmentally friendly manner. All plastics waste must be contained on board ships, at sea, due to International Maritime Laws, which is a major problem as a high percentage of the waste is contaminated with organic matter.

The focus of mainstream research, nowadays, is on recycling. Recycling for reuse has become the name on everyone's lips and a function which most of us perform to some degree or another. Recycled paper is in common use. eg for envelopes, but it is not generally known that the chemicals used to dissolve the printers ink out of say newsprint and printed paper and cardboard packaging produces an effluent which is extremely damaging to the environment. Moreover, the energy consumed in the recycling of paper and cardboard is not low.

Recycling has become of such importance that bottle banks have become a common sight in our towns and cities, and door to door collection of waste paper and textiles have become a feature of our lives. Skips are available also for the disposal of waste which is not mixed up with organic materials of the kind ordinarily found in domestic and industrial refuse. Thus, such skips which contain glass, cardboard, paper, wood, textiles, metals and plastics films and plastic bottles from domestic and industrial sources can be collected and taken to a recycling plant. One such recycling plant sorts the glass, metals, wood, contaminates, plastics, paper textiles, waste and burnable from each other. The plastics and paper are fed to a bale press, the bales are fed to a shredder, and the shredded plastics washed, dewatered, dried and then sorted with hydrocyclones. The sorted plastics is fed to an extruder and the molten plastics passed through a die which produces plastics threads that are cut into pellets by means of rotating blades. The plastics pellets are packaged to be ultimately formed into lower grade plastics products such as coat hangers, flower pots, garden hoses, pipes, sheeting and bottles etc. The plastics is downgraded, because of its melt history, being a mixture of different kinds of plastics and cannot take colour pigments, so that the products end up a dull grey/brown/green colour.

Another plastics recycling process uses waste articles made mainly from thermoplastics, in particular high and low density polyethylene and polypropylene. Other thermoplastics such as PET and ABS can be recycled but under certain controls and PVC may only be present in small proportions without special additives being used. The sources of new material for this process are manufacturers of plastics articles, ie, film, bags, tableware, syringes, toys, book bindings, trays, various domestic articles, e.g. containers and bottles, milk, suppliers who produce their own plastics milk bottles and who have redundant and broken milk crates, beverage companies who use plastics bottles and containers, and who have broken beer crates, large volumes of below standard articles, e.g. piping, ducting, plastics joints, disposable plastics medical goods, head waste from manufacturers of plastics articles from starting up the machine and after shutdown, plastics packaging to be disposed of by manufacturers, distributers and retailers and contaminated or sub-standard granules from plastics processors.

The collected plastics material is sorted, granulated, mixed/blended and then plasticized in an extruder consisting of a large steel screw in a heated steel barrel, by means of the fiction caused by the rotating screw melting the plastics. The plastics used in this process can include up to 1% contaminants, such as paper, but any more can cause unacceptable wear to the extruder barrel and screw. Because of this wear, the use of contaminated plastics in extruders which are in general use in recycling to reuse is prohibitive above 1% contamination level. Extruders are expensive machinery whose parts are expensive to replace, require skilled and specialist operators and can generally only be used to recycle homogenous plastics waste. This process can produce basic solid plastics elongated product such as posts, poles, stakes, boards and a variety of similar shaped products, but again the plastics is of down graded nature and could not be mixed with virgin plastics. Specific use of the product are slatted floors for farm animals, pallets, underground cable covers, fencing posts and street and road furniture. Again these products are a dull colour as they cannot accept colour pigments but special painting and one-colour plastic coating processes have been devised.

Another recycling process involves the plastics cups supplied by the makers of beverage vending machines. One supplier has devised a method of collection from the sites of use. This involves supplying collection receptacles with drip trays at the vending machine locations and arranging for periodical collections. One collection cycle involves two trucks, two drivers and three support staff. It has been found that the collection receptacles for these plastic cups can contain as little as 40% by weight plastics waste and as much as 60% by weight organic waste comprising say, coffee, milk, sugar, soup etc. This can result in a hygiene problem as the organic material in the collection receptacles begins to support bacterial growth and to smell giving rise to complaints. The plastics cups have to be cleaned to remove the organic contaminants before being recycled to reuse using known extrusion techniques. And even though one would have thought that the same plastics used for all the cups would be identical, variations do occur in the same plastics from different manufacturers, eg Mobil and Shell, which results in downgraded recycled plastics product.

It is worth at this stage examining more closely the thoughts behind re-cycling. As well as endeavouring to protect the environment, one of the main factors in re-cycling is to preserve the natural resources of oil and gas. It is a recorded fact that of the volume of oil produced only 5% is used in the packaging industry, 95% is burnt, the majority by the internal combustion engine. It would be a brave government that would tackle that particular problem head on. So ever eager to win votes without taking risks they have targeted the packaging industry as being the main aim in their legislation for re-cycling. However, it is important to recognise that environmental protection must encompass the use of all resources, including labour, land, materials and capital energy.

If therefore the stated aim is to protect natural resources does the question of re-using waste EPS stand up to scrutiny ? As already mentioned, the treatment of downstream post consumer plastics (that is plastics waste) presents inherent difficulties.
1. There needs to be separation of the waste into polymer type according to compatibility,
2. It needs to be washed, with the consequent use of a resource which we are told will become scarcer due to global warming,
3. It needs sophisticated separation machinery, which is energy consuming,
4. The capital cost is high, an effective plant could be in excess of £1,000,000.00.
5. The problem of transporting the waste to the plant is still relative to the 90% or so of air or blowing agent that is being carried.
6. The excess movement of heavy vehicles is damaging to the infrastructure and the exhaust emissions are environmentally unfriendly.

The total use of energy is calculated to be nearly three times as much as that used to produce the original packaging. How then is it possible to conserve the source of energy and yet satisfy the demands of the governmental bodies for extending the life of the plastics?

Any person of ordinary skill in the art in the plastics industry would tell you nowadays that the way to handle EPS waste is to burn it. Incineration plants have been set up, which have been successful in burning mixed waste, but there are shoals of statistics which will tell you how profligate we are to waste this energy source and there is the high capital cost of the plant.

Whatever may be said in public, the Applicants' research shows that there is no business operating recycling without incurring a significant loss in the process.

Some recent French research concluded that only 70% of costs are recovered in a typical plastics recycling operation. Also, recycling of plastics does not solve environmental problems. It operates merely to delay the disposal of plastics by the community. Thus recycling processes, in making a loss, are in the final analysis environmentally unacceptable as they deplete both capital and human resources.

Accordingly, plastics produced for reuse from plastics waste which has been recycled cannot compete with regard to cost and quality with virgin plastics, unless one is dealing with uncontaminated factory scrap plastics which can be fed back into the processing chain for extrusion. Contaminated plastics waste has to be subjected to a number of operations before it is suitable for granulation or pelletization, such as crushing, shredding, sorting, washing, dewatering and drying. Moreover, there is some plastics waste such as computer, audio and video tapes and floppy discs which because they incorporate metal oxide, and are contained by cassettes of different plastics materials cannot be recycled in currently available recycling plant. And moreover, incineration is prohibited because metal oxides when burnt give off noxious gases.

Credit cards which have to be destroyed for one reason or another, eg because of mistakes made in personal details during manufacture present problems as they are contaminated with metals and print. At present damaged credit cards are presented edge on to a shredder and are collected for transport to an incinerator. But it has been known for cards to miss the shredder knives and thereby give rise to a security risk. Moreover, expired credit cards are normally destroyed by cutting in pieces and disposed of into the refuse cycle. This represents a considerable quantity as, in the US alone, it is estimated that around one billion credit cards are in circulation at the present time.

Even EPS used in a protective role in packaging is more often than not contaminated with e.g. wood slivers from pallets, bar codes made of paper or cardboard, and shrink wrap or straps made of different plastics material.

EPS fish boxes, which because of their insulation properties, can give at least an extra day's "shelf" life to the packed fish once removed from refrigeration, present particular problems in disposal. This is because, once used, they are contaminated with fish scales and slime, become smelly and are a health hazard. Moreover, used fish boxes have a high degree of salinity thereby precluding reduction in size by shredders and presses which would "rust" up. So, hitherto, used fish boxes have been burnt (incinerated) or disposed of by landfill. Neither of these courses is immediately open in one instance known to the Applicants, where a hotel in Europe which is snow bound during the winter, has to store large quantities of EPS fish in fish boxes to last the winter. All that can be done until the spring thaw when the roads are open to transport is to spray the used fish boxes with disinfectants to reduce the stench and minimize health hazard.

Even the waste EPS from fish box manufacturing factories cannot readily be reused because once the waste has hit the floor, so to speak, it cannot be used for food. Thus, the waste EPS has to be continuously removed. Applicants have ascertained that in one UK fish box factory, the amount of waste EPS is so high that four skips full per day have to be transported to landfill. But EPS saves the fish industry around £10,000,000 a day because it increases the shelf life subsequent to removal from refrigerated stores.

Used disposable plastics nappies or diapers which, in addition to the outer liner make use of special absorbent plastics also present a disposal problem as they cannot be flushed away into the sewage system and may also be heavily contaminated with waste organic matter which leaves incineration and landfill again as the only options available.

Plastics medical waste also presents a problem all of its own; particularly where disposable plastics syringes are concerned in view of the danger of the transfer of fatal diseases such as AIDS and Hepatitis B from accidental needle strike. Not only is plastics medical waste contaminated with organic material but also in some instances with metal of which the prime example is syringes.

In addition to the drive to recycle waste plastics to reuse to make new products, environmentalists are also pressing for a reduction in the amount of plastics packaging used overall and reuse of plastics packaging as many times as possible.

Examination of these options with regard to EPS results in the finding that each has its drawbacks.

Modern packaging has been developed to cope with the demands of modern living, and it is because of this development that it is now possible to reduce considerably the amount of damages experience in the transit of goods. It is also true to say that the insulation and sealing of food has helped to increase the shelf life of many food products. It is therefore difficult to see an economic alternative.

Indeed, a leading German research firm has assessed what would be the environmental impact if plastics packaging was replaced by the best alternative in each individual application. The results were most significant: energy consumption would double; raw material consumption would quadruple; the volume of waste would increase by 150%; and the cost of packaging would double.

To reuse the goods is laudable but in certain industries such as food this would not be practical because of the contamination of the wrappings.

The plastics industry is seen to be very efficient at reclaiming it's own waste at source. The fact that there is a percentage of the blowing agent left and the fact that the materials are homogeneous makes it easy to re-introduce the waste into the manufacturing process. It is claimed that the waste factor is now as little as 1%. However, when the plastics packaging is moved downstream to the end consumer, problems begin to arise. Firstly, as has already been discussed, to be properly processed the plastics need a complimentary polymer profile. Secondly it is inevitable that the product will become contaminated in use.

Thus, landfill is still the most popular way of management of plastics waste, despite all its disadvantages. But there has increasingly become a desperate need for environmental reasons to solve the problem of plastics waste management as landfill sites are becoming more and more scarce, the pressure from environmental groups is increasing and recycling as the sole alternative is financially unviable.

Applicants are aware of known apparatus for melting plastics waste, all of which cannot cope with contaminated plastics waste for reasons which will readily become apparent.

Thus, DE Gebrauchsmuster G 85 25 903.9 discloses an apparatus for the destruction of data stored on microfilm to guard against reenlarging and espionage, by liquifying the film material in an electrically heated sealed metal container which has electrical heating elements in its wall. The metal container has a specially designed nozzle situated in its base through which the liquid material is removed in droplet form i.e. an interrupted flow, under gravity. The droplets are converted into granules by the cooling action of air on the granules as they fall over a set distance into a receiving container which can be pulled out like a drawer. Interrupted droplet flow is essential to such apparatus in order to produce a granule size which would prevent the possibility of any reading by re-enlargement. Such an apparatus would not work with contaminated plastics waste as the contaminants would block the fine nozzle and the disposition of the heating elements would not provide the requisite melting effect.

Patent Abstracts of Japan, volume 9 No. 311 (M-436) (2034), 7 December 1985 and JP A, 60145809 (Masaki Tomizawa) 1st August 1985 disclose a method of lowering the treatment cost of waste resin by providing a combustion resin passage for feeding part of waste resin that has been melted in a melting tank by steam pipes and by a heating burner to a resin burner where it is burnt. When the resin burner becomes operated in a steady manner, the heating burner is stopped and the apparatus is operated using only heat from the resin burner. Waste resin from the melting tank runs downwards under gravity through a resin discharge pipe and is heated by molten resin running through a passage which feeds the resin burner and surrounds the middle and upper portions of the discharge pipe. Again, such an apparatus would not function with contaminated plastics waste because the passage ways and discharge pipes would become blocked. and resin burning is environmentally unfriendly in giving rise to greenhouse gases.

In GB 1,572,623 a combination of a melt chamber and an extrusion screw is used to produce molten plastics from foamed thermoplastics head waste of scraps, odds and ends, chips and cut ends produced during the processing of plastics and synthetic resins for producing good quality recycled pellets. The extrusion screw extends horizontally beneath and is fed from an elongate melting chamber which is V-shaped in cross-section and extrudes threads of plastics through a suitable die. To prevent reverse upward movement of the foamed plastics waste, the melting chamber is provided with a plurality of fins which project towards each other from the chamber walls on opposite sides of the V. As has already been explained, such apparatus, in using an extruder, is expensive to buy, operate and maintain and cannot deal with plastics waste which has greater than 1% of contaminant and even this percentage will depend upon the nature of the contaminant. Some contaminants will cause blockage of the extruder and others will cause unacceptable wear to the extruder screw and barrel involving enormous replacement expenditure.

In another apparatus involving an extruder, the extrusion screw is arranged vertically but this apparatus suffers from the same disadvantages as those of an extruder having a horizontal screw.

With apparatus involving extrusion, additional pressure is required to melt the plastics waste and to force the molten plastics waste through a die.

It is within this context and in response to a long felt want that the Applicant developed a method and apparatus for treating commercial plastics waste, and this method and apparatus is described in US 5,240,656. The Applicant has now developed further the concepts disclosed in US 5,240,656 and in doing so has created the following invention, which is not only of use to the apparatus and method of US 5,240,656, but will be useful for similar apparatus and methods, or other apparatus and methods using principles similar to that disclosed in US 5,240,656.

Because the invention described in US 5,240,656 is of fundamental background to the present invention, described herein are certain aspects disclosed in that document.

In US 5,240,656 the Applicant disclosed a principle in which contaminated plastics waste can be reduced in volume to form a solid product having a high weight to volume ratio relative to the low weight to volume ratio of unprocessed plastics waste.

In order to carry this principle into effect, and in accordance with one aspect of the invention of US 5,240,656, the volume of contaminated plastics waste is reduced by densifying the plastics waste.

According to US 5,240,656, the invention described therein may be expressed in terms of heating contaminated waste plastics to a temperature which is sufficiently high to melt the waste without carbonizing, decomposing, or burning so as to produce a controlled melt.

The controlled melt represents an important feature of that invention because it enables the melting temperature of the plastics waste to be kept within tightly defined parameters which prevents burning or decomposition but removes any gases present in the plastics waste or produced by vaporization of any contaminants therein. The gases produced by the densification process according to the invention of US 5,240,656 are vented off via a suitable extraction means which is connected to a vent such as a flue via a filter, e.g. a carbon filter, for the purpose of removing any odours.

Control of the melt is ideally achieved by utilizing heating in a particular way. Thus, from a further aspect the invention of US 5,240,656 consists in densifying waste plastics by heating to produce a melt which is controlled by applying heat in the region of the middle of the melt. The purpose of applying heat to the centre of the melt was to ensure that the molten plastics were heated throughout, and thereby to prevent the centre of the plastics stream from bridging, i.e. to prevent relatively cool thus relatively solid portions forming within the molten stream. Bridging is a problem because it slows the rate at which plastics will flow through the apparatus. However, even applying heat to the centre of the melt in the manner disclosed in US 5,240,656 Applicant found that bridging was not prevented satisfactorily across a range of plastics waste.

For plastics waste which contains a gas such as air, the invention of US 5,240,656, from another aspect, resides in removing the said gas to densify the plastics waste, which step conveniently also involves melting the plastics waste. Applicant has now realised that plastics waste containing gas, such as EPS, can be problematic in terms of densification and it is these types of plastics that have the greatest tendency to bridge, thus reducing the throughput of plastics waste.

Rather than burn or ignite, i.e. have a flashpoint, some plastics decompose at certain temperatures. Thus, it is essential that the temperature of the controlled melt does not rise above the decomposition point of these plastics in order to avoid giving-off toxic fumes. The controlled melt may advantageously be produced by use of zonal heating which involves a plurality of zones which may range from 2 to 4 or more zones at temperatures which are controlled below the carbonization or decomposition point of the plastics waste. Thus, the temperature employed increases in the direction of movement of the plastics waste from an entry zone where the plastics waste is beginning to loose its volume and shape but is not yet melted fully to an exit zone where the plastics waste is molten and is in a flowable condition.

Thus, according to the invention of US 5,240,656 it is advantageous to maintain the flowable condition of the molten plastics waste through the exit zone by maintaining the temperature of the exit zone at a sufficiently high value, e.g. heating the exit zone, so as to produce a continuous flow of the molten plastics waste out of the exit zone, beyond which solidification of the molten flow of plastics waste can take place to produce a continuous succession of solidified bodies or products.

For the treatment of contaminated plastics waste, the dimensions of the exit zone need to be such that any contaminants in the molten plastics do not interrupt the flow or cause any blockages. For example, those dimensions should be suitable such that food products (e.g. hamburgers that have been thrown away in their clamshell containers from a fast food restaurant) will not cause any problems. However, the invention of US 5,240,656 does not provide a suitable means to dispose of contaminated plastics waste containing items such as common soft drink cans.

Therefore, in some instances described by US 5,240,656, the combination of exit zone size and heating facilitate the melt treatment and solidification stages and so enable the invention to provide for a continuous flow, from plastics waste entry to molten plastics waste solidification. In other instances, however, problems still occur.

The invention of US 5,240,656 also discloses a method of treating contaminated plastics waste comprising heating the plastics waste in a melting zone to melt the plastics waste and heating the molten plastics in an exit zone which is downstream of and beneath the melting zone with the exit zone having a cross-section of such an area that molten contaminated plastics waste can flow under gravity without interruption out of the exit zone. Again, in practice, Applicant faced difficulties maintaining the flow of some types of plastics waste due to bridging, and as elaborated upon below, due to contaminants such as soft drink cans.

US 5,240,656 discloses that by forming the product to a shape of say generally rectangular configuration, e.g. of brick shape, such as a briquette, the solidified product may be stacked. This represents a further advantage in space saving e.g. in landfill and in transportation and is particularly important where space may be at a premium such as on board ship or in a snow bound hotel. Applicant has now realised that a briquette is not a suitable shape to encompass waste such as common soft drink cans and Applicant was surprised at how often such cans were incorporated in waste plastics.

Applicant's previous invention in US 5,240,656 could use weight sensitive gimbals to prevent heavier objects such as glass bottles, pieces of wood, or brick from entering the melt chamber, but light objects such as a common soft drink cans were more of a problem because they were light enough to enter the melt chamber but too large to fit in the mould. Applicant attempted to enlarge the size of the mould such that briquettes were formable to encapsulate a common soft drink can, but such briquettes were unwieldy and took an unacceptably long time to solidify because they had to be larger than the previous briquettes.

It is desirable that the flow of plastics waste, once molten, is not interrupted in its flow through the outlet, for example, by partial solidification which may cause bridging. Thus, the invention of US 5,240,656 provides for heating the molten plastics waste in the region of its outlet. US 5,240,656 discloses that one way of achieving this is to arrange the heating element(s) closer together in the outlet region. Alternatively or in addition to peripheral heating, heating may be provided in the middle of the melt and maybe, even at the bottom of the melt. However, again none of these measures were sufficient to prevent bridging across a variety of waste plastics.

US 5,240,656 discloses that at least the lower portion of the melt chamber preferably defines an open volume free of any vanes, baffles, fins or other obstructions projecting from the chamber. It was believed that this facilitated the downward movement of the contaminated plastics material and flow of the molten plastics material through the chamber outlet. While such free flow is desirable, it is achieved at the expense of providing sufficient heat to prevent bridging.

Applicant attempted to decrease the tendency of the molten plastic stream to bridge by making a number of adaptations, including increasing the heat supplied to the elements and providing additional heating fins protruding into the melt chamber. Maintaining maximal flow while providing sufficient heat to prevent bridging, but not so much as to overheat some portions of the molten stream (i.e. those portions in direct contact with the element) was a prime consideration while experimenting, and none of Applicant's earlier experimental efforts produced satisfactory results.

To meet safety requirements, US 5,240,656 states that it is desirable for the melt chamber to comprise a vent or other outlet, and this is disclosed as being in an upper portion thereof for exhausting any odours e.g. fumes and any other gaseous substances that might conceivably be given off during melting of the plastics waste. For example, organic material in medical waste may give rise to fumes.

Plasma technology, such as atmospheric pressure non-equilibrium plasma (APNEP) which is a product patented under US 5,874,705 and is marketed by C-Tech Innovation Ltd, has a number of uses, and these include the destruction of volatile organic compounds (VOCs). The technology is efficient but unfortunately is also expensive, and therefore cannot cost-effectively be used for many of its potential applications. Other uses of APNEP include titania coating of polymers, coating of polymer fibres, activation of polymer fibres, treatment of optical fibres, coating of glass with tin oxide, silica or titania, coating of silicon, and gas heating.

It was with this background that Applicant set out to devise an improved plastics densifying machine, one that would work more efficiently than the prior art, such as the apparatus disclosed in US 5,240,656, and that could overcome at least some of the disadvantages of the prior art or, alternatively, at least provide the public with a useful choice.

With reference to the invention disclosed in US 5,240,656, it was considered that the main factor contributing to bridging was partial solidification caused by insufficient heating of the plastics melt. One way in which bridging was guarded against was to provide an exit zone or reservoir for molten plastics, the reservoir being heated to ensure that the plastics waste remained in a molten state and so would flow readily into a mould. However, Applicant recognised that providing such a reservoir was insufficient to prevent bridging.

It is possible to mix the plastics waste in some way to ensure uniform heating. Typically, in order to ensure a thorough distribution of heat throughout a volume of plastics waste, a mechanical mechanism such as a stirring paddle may be incorporated in order to encourage mixing. Whilst such mechanisms can be effective, they also tend to be expensive in terms of initial cost and maintenance due, in part, to their mechanical complexity.

JP 61273913 descsribes an arrangement for heating waste plastics where hot air is blown into a stove 9 which is then released through a discharge port. The hot air causes softening and subsquent melting of the plastics waste material.

US5470521 discloses an apparatus for the thermal identification of plastic waste comprising a melt chamber 152 having an inlet and an outlet and heating elements 132 in the form of outlets for inputting hot air into the melt chamber 152 in order to improve the melting capability of the melt chamber.

According to the present invention, the heating elements themselves can be used to create a mixing effect. This is a surprisingly convenient and cost effective manner of ensuring sufficient mixing of the plastics waste to prevent bridging, and therefore ensuring a good throughput of plastics.

Therefore, according to the present invention there is provided a method of treating a volume of plastics waste as defined in claim 11.

Preferably, the plurality of heating members have tapered leading edges terminating at different heights in the region where the entry zone leads into the heating zone.

It will be appreciated, therefore, that not only do the heating members introduce heat throughout the melt chamber, which allows melt chambers of increased capacity to be used whilst maintaining the plastics waste in a molten state, but also they also ensure that the plastics waste is "mixed" upon entry into the heating zone i.e. creating a mixing effect.

It is preferable, though not essential, that the volume of plastics waste is of the form of relatively small particles when the plastics waste is fed into the heating zone. Thus, the method may include the step of fragmenting the plastics waste prior to the plastics waste entering the heating zone.

More preferably, the step of fragmenting the plastics waste may occur within the entry zone and may be carried out by way of a shredding action.

Although the invention disclosed by US 5,240,656 discloses filtering the gaseous substances such as odours, fumes and Volatile Organic Compounds (VOC's) given off as a by-product of the densifying process, conventional filter systems tend to impose substantial maintenance costs and safety hazards. In pursuit of alleviating such drawbacks, the method of the invention preferably includes filtering fumes released when the plastics waste is heated and filtering air outside the entry zone, heating zone and cooling zone by utilising atmospheric pressure non-equilibrium plasma technology.

Expressed in another way, the present invention provides a method of cleaning not only the odours, fumes and VOC's that may be produced during the densifying process but also removing contaminants from the air external to the apparatus.
It should be appreciated that the invention also resides in apparatus for carrying out method defined hereinabove.

As has been mentioned, Applicant has recognised that the presence of gas within the melt chamber can encourage partial cooling and solidification of the plastics melt and so is believed to be a factor that contributes to bridging. The provision of a vent itself therefore is beneficial in increasing throughput of plastics waste through the apparatus.

A further factor contributing to the occurrence of bridging is partial cooling and solidification of the flowable plastics melt within the melt chamber due to insufficient heating. It is to be noted that a temperature gradient will exist in the plastics waste within the melt chamber whereby the plastics waste near the periphery of the melt chamber will be heated to a greater temperature than the plastics waste near the centre. Simply increasing the heat output of the melt chamber is not a practical alternative since it is likely that carbonisation of the plastics will occur.

A problem therefore presents itself in that whilst the pre-programmed temperature of the melt chamber of the apparatus may melt certain plastics types within a volume of plastics waste, the temperature may be insufficient to melt other plastics types without causing decomposition or burning of at least some of the plastics waste. Accordingly, it may not be possible simply to melt both types of plastics at the same time.

Thus, in accordance with the present invention there is an apparatus for treating a volume of plastics waste as defined in claim 1.

Preferably the heating members may be constituted by fins having a leading edge near the inlet of the melt chamber and a trailing edge near the outlet of the melt chamber, wherein the leading edges of alternate heating members terminate at different upstream locations relative to the leading edges of adjacent heating members to provide a non-uniform thermal surface.

As well as the plurality of fins presenting a relatively large heated surface area to the plastics waste within the melt chamber, the alternating leading edges of the fins cause the plastics waste to "tumble" unevenly in the melt chamber.

Although a series of identical fins would produce a uniformly heated flowable plastics melt, plastics waste may accumulate on the tips of the fins and possibly obstruct the entry of plastics waste further, once again causing a form of bridging thus retarding waste plastics flow.

In a preferred embodiment of the invention, the melt chamber has oppositely facing side walls and the heating members extend between and are removeably supported by the side walls. This enables a modular construction of the melt chamber and realises multiple benefits.

For instance, individual heating members may be replaced in-situ without requiring removal of either the melt chamber itself or the entire apparatus to another location for maintenance which could render the apparatus unserviceable for extended periods.

A modular construction also enables the melt chamber to be manufactured efficiently with regard to design and cost so that the complication of producing a cast structure with integral heating members is avoided. The heating members can therefore be developed pertaining to a particular customer specification.

For example, it is possible to install heating members having different heating capacities - although a standard arrangement of heating members may he used for a variety of plastics waste, some users may employ the densifying apparatus for a singular type of plastics waste and so will not require the capability to heat the melt chamber to a wide range of temperatures.

Furthermore, some waste plastics can be heated quickly from the outset, whereas it may be more appropriate to heat other waste plastics slowly initially. By providing an apparatus with modular heating members, it is possible to vary the amount of heat provided at different parts of the plastics stream and therefore cater for such different types of waste.

Such fins are at least twice as efficient in terms of energy usage than other recycling machines, such as those that use electrically driven archimedes screw or pressure rams.

In addition, with foreknowledge of user requirements, it can be ensured that the densifying apparatus cannot heat waste plastics beyond their flash point or decomposition point. Accordingly, a safety feature is provided.

The invention also extends to scenarios where microbial or viral load is reduced or substantially eliminated. Reducing the microbial load, or ensuring waste is free of viral matter is desirable in many situations, but is of particular benefit where waste may need to be stored temporarily before appropriate disposal, particularly in close proximity to animals or humans. In cruise ships, for instance, plastics waste may need to be stored for many weeks before the ship will enter a port where disposal is permitted. Currently, plastics waste generated by such ships is not sterilised and a cost-effective means for doing so has not, so far, been developed.

As a consequence, micro-organisms or viruses amid plastics waste may propagate to present a potential health risk to ship-board passengers and to personnel involved in the eventual disposal of the waste. Treating such waste according to the method described herein can eliminate, or at least substantially reduce, any such health risk.

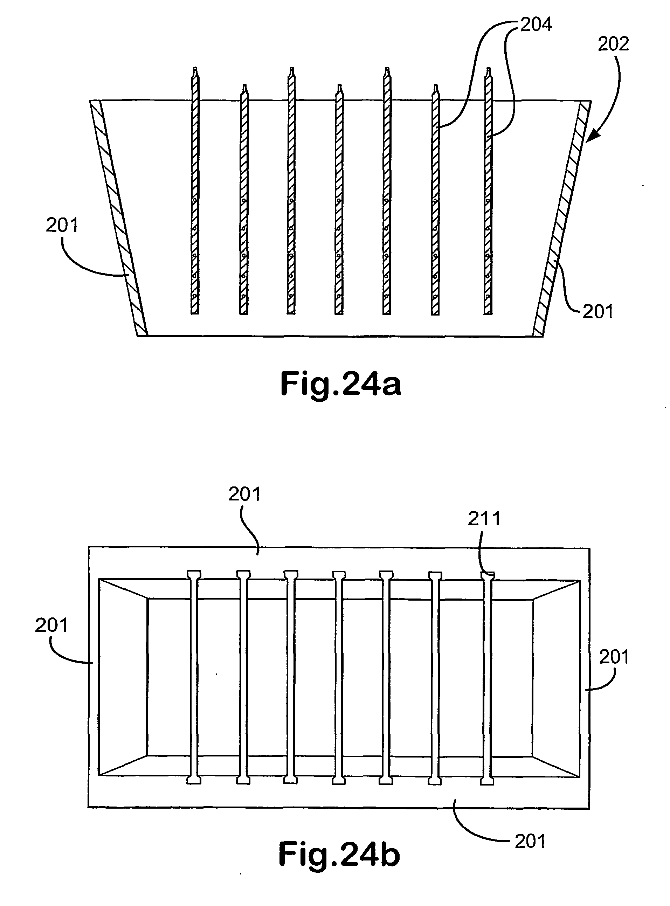

In order that the invention may be more readily understood, reference will now be made to the accompanying drawings. Figures 24 to 27 clearly show the presently claimed invention whereas the remaining Figures are included for background information and also to describe other aspects of a plastic processing apparatus not forming part of the claimed invention. Referring to the Figures:
Figure 1 is a perspective view of a housing forming part of one embodiment in accordance with the invention described in US 5,240,656, for commercial use;
Figure 2 is a perspective view of a housing forming part of another embodiment in accordance with the invention described in US 5,240,656, for commercial use;
Figure 3 is a perspective view of a housing forming part of another embodiment in accordance with the invention described in US 5,240,656, for industrial use;
Figure 4 is an exploded perspective view including the main operating components which are mounted within the housing shown in any of Figures 1 to 3;
Figure 5 is a side elevation of the components illustrated in Figure 4 in an assembled condition, and shows an upper part of the housing of Figure 3 in chain lines;
Figure 6 is a vertical section taken along the line VI-VI of Figure 5;
Figure 7 is a partial section of an electrical resistance heating element used in the apparatus of Figures 4 to 6;
Figures 8a and 8b are schematic views showing alternative arrangements of electrical heating elements for the melt chamber illustrated in Figures 4 to 6;
Figure 9 is a plan view taken generally along the line IX-IX of Figure 5 and 3 looking in the direction of the illustrated arrows;
Figure 10 is a plan view of a reciprocable moulding member forming part of the apparatus of Figure 4;
Figure 11 is an end view and Figure 12 is a cross- section of the reciprocable moulding member shown in Figure 10;
Figure 13 is a perspective view of a solidified body or product of contaminated plastics waste to an enlarged scale produced by the apparatus illustrated in Figures 1 to 12;
Figure 14 is a side elevation of an alternative apparatus to that of Figures 1 to 12 and with a different housing shown in chain lines;
Figures 15 to 17 are cross-sectional detail views of modifications of the apparatus shown in Figures 4 to 12, with the modification of Figure 17 being specifically for the treatment of medical plastics waste;

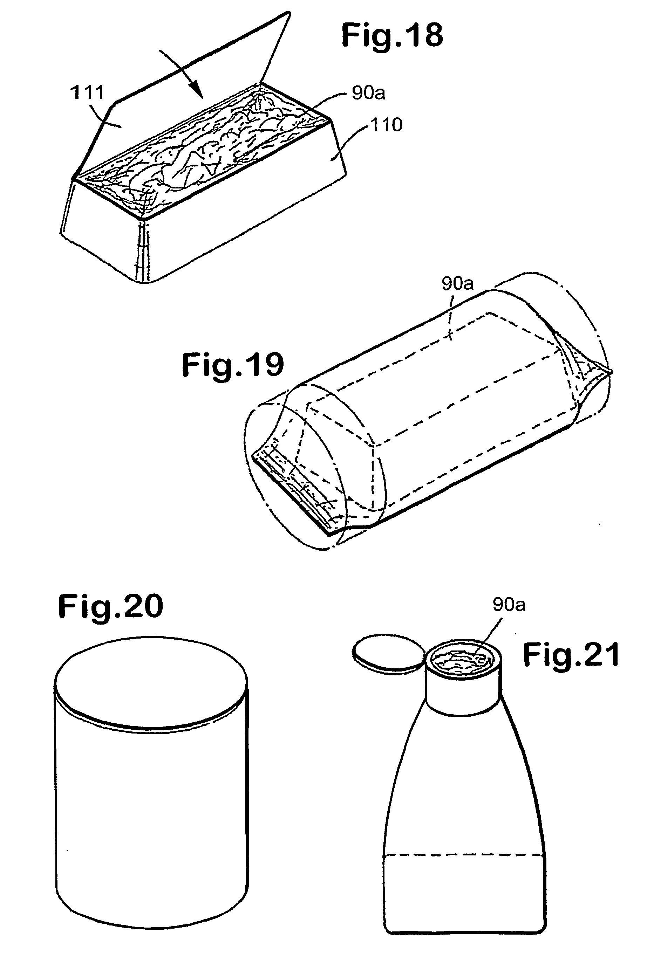

Figures 18 to 21 are perspective views to an enlarged scale of different kinds of containers for encapsulating a solidified body of medical plastics waste produced by the apparatus of Figure 17;
Figure 22a is a side view of an embodiment of an apparatus for treating plastics waste and constructed in accordance with the invention;
Figure 22b is a side view of another embodiment of an apparatus for treating plastics waste and constructed in accordance with the invention;
Figure 23 is a schematic view of another embodiment of the invention;
Figure 24a is a sectional view of a melt chamber of an embodiment of the invention and illustrating an appropriate arrangement of the heating elements to be used therein;
Figure 24b is a plan view of the melt chamber as shown in Figure 24a;
Figures 25a and 25b are side and end views of heating members for use with the melt chamber as shown in Figures 24a and 24b;
Figure 26 is a side view of a heating member as shown in Figures 25a, 25b showing surface markings;
Figure 27 is a photograph showing different types of plastics waste that can be treated in the apparatus constructed in accordance with the invention; and
Figure 28 is a schematic view of an embodiment of the invention incorporating a modification to the embodiment as shown in Figure 22b.

In the drawings, where appropriate, the same reference characters are used to designate the same or similar parts.

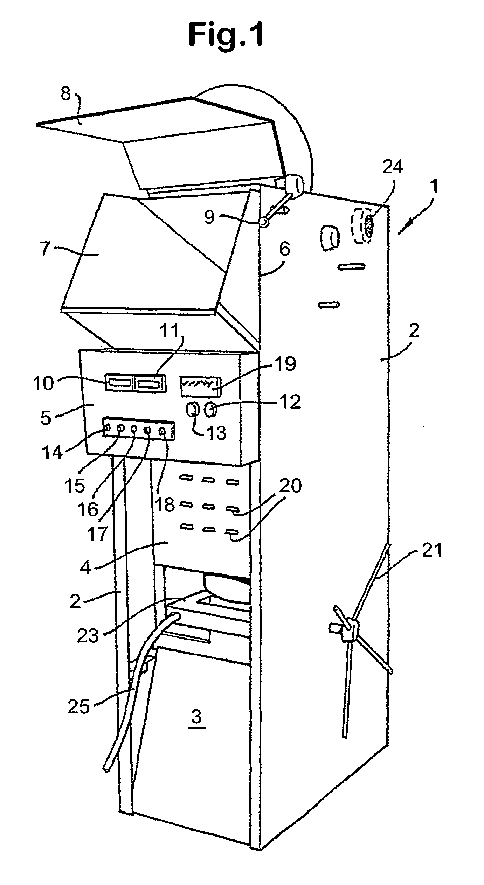

Referring to Figure 1 there is shown a housing in the form of a cabinet which is generally indicated at 1 and which comprises side panels, 2 front panels 3,4 and 5, a top panel (not visible) and at least one rear panel (not visible). Within the cabinet 1 is a chassis to which the cabinet panels are fixed and which supports the main operating components of the apparatus to be described. The cabinet has an opening 6 in its upper front region through which a loading hopper or entry chute 7 for directing contaminated waste plastics, such as any of those described in the foregoing, into a densification or melt chamber to be described for treatment. The loading hopper 7 which is preferably of metal such as stainless steel, which is non-combustible has a door 8 which is hinged to the top panel and which is opened and closed manually by a handle 9.

The front panel 5 of the cabinet 1 constitutes a control panel which carries various electrical control elements such as temperature gauges 10, 11 switches 12,13 indicating lights 14, 15, 16, 17 and 18 and six fused circuit breakers 19 all of which are connected in an electrical control circuit which is not shown as it does not in itself form part of this invention. The circuit breakers 19 are provided for each individual part of the electrical control circuit. And, if desired the operations affected through the electrical control circuit may be controlled by a suitable PLC (Programmable Logic Controller) disposed behind the control panel 5. Apertures 20 are provided in the front panel 4 which acts as an air inlet or ventilation grill 20.

A rotatable operating handle 21 for manually indexing a mould cavity support member 23 to be described is supported in the side panel 2 and chassis for rotation with respect thereto.

In order to remove any odours, fumes or other gases which may be produced from the treatment process, a venting or exhaust port 24 is provided in the side panel 2 and is connected to a suitable filtration system and to a fan which are not shown. The door 8 seals the loading hopper 7 and the melt chamber to prevent any gases from escaping other than through the port 24. Liquid coolant is supplied by a pump (not shown) in a closed circuit through ducts such as 25 to the mould cavity support member 23.

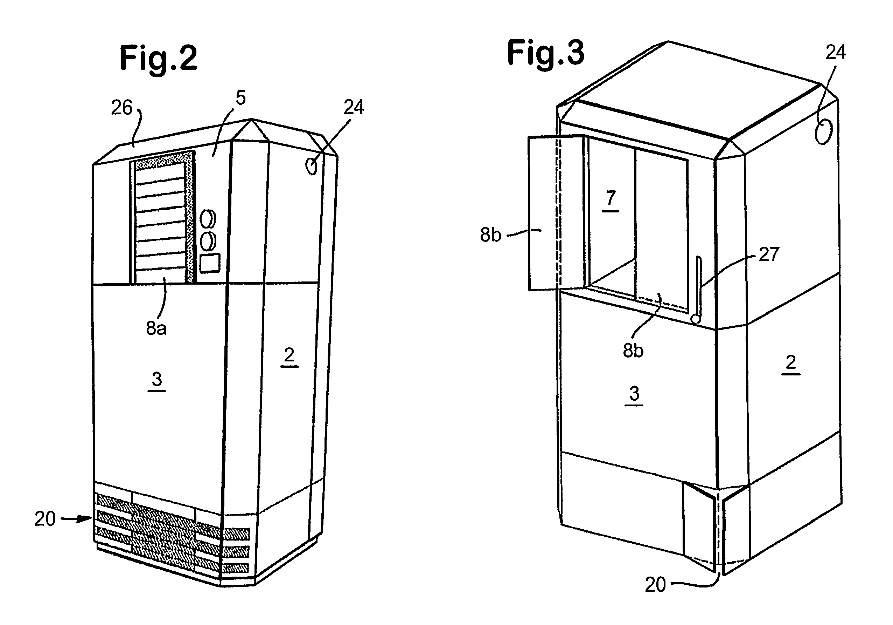

The cabinet 1 shown in Figure 2 differs from that shown in Figure 1 in its aesthetic appearance, in the position of the air inlet 20, in the kind of door which is a flexible articulated door 8a, in the position of the control panel 5 and in the provision of an electronic display (not shown) on the bevelled portion 26 at the top of the cabinet. The air inlet 20 is at the bottom of the panel 3 instead of being in the panel 4, which is omitted in this embodiment. The door 8a comprises articulated slats which, in the vertical closed position illustrated, seals the cabinet 1. When the door 8a is opened by pulling down, the door forms a shelf for receiving the plastics waste. The action of closing the door to the vertical position retracts the shelf, causing the waste to fall into the hopper.

The cabinet 1 illustrated in Figure 3 has two sideways opening doors 8b and a handle 27 for locking the doors 8b in a sealed position and for releasing the doors for opening. In both these embodiments of Figures 2 and 3 the doors are a flush fit with the cabinet front panels.

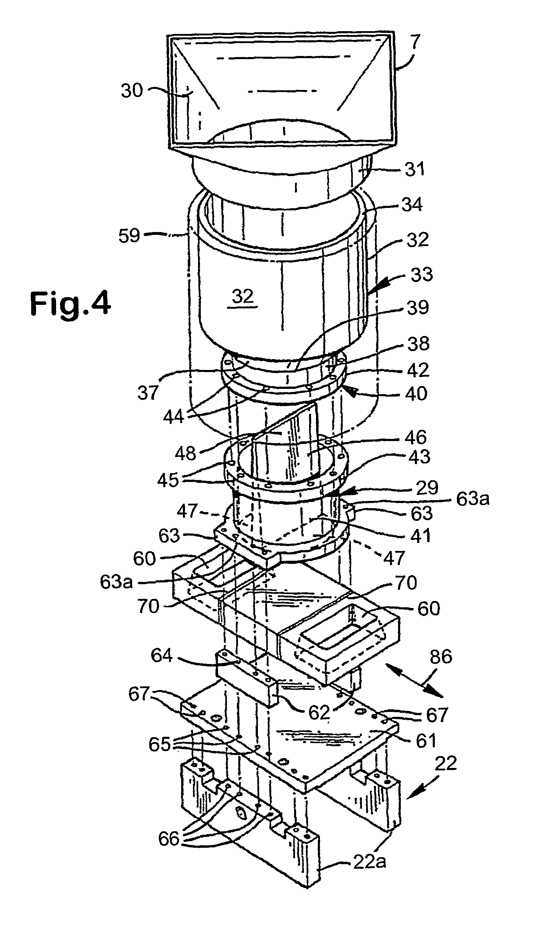

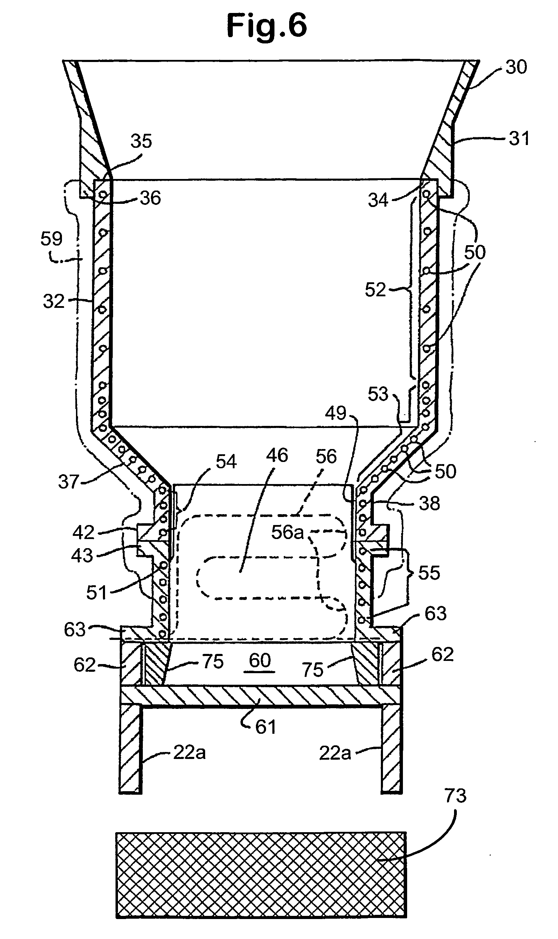

Referring now to Figures 4 to 12, the loading hopper 7 has an upper tapering portion 30 and a lower cylindrical portion 31 which fits on the upper cylindrical portion 32 of a densification or melt chamber 33 for receiving and heating contaminated plastics waste such as used EPS cups, trays and clamshell containers of the kind supplied with food in fast food restaurants for example. As will be appreciated from Figure 6, the top edge region 34 projects into a recess formed by a shoulder 35 which rests on the upper edge of the upper cylindrical portion 32 and by a peripheral restraining flange 36 which provides for ease of assembly.

The longer cylindrical portion 32 which is of larger diameter merges into a frusto-conical portion 37 which tapers in the direction of, and merges into, a smaller diameter cylindrical portion 38 the junction of which with the frusto-conical portion 37 defines an outlet 39 in the bottom of the melt chamber 33 and constitutes an extended outlet chamber or exit zone 40. The outlet chamber or exit zone 40 can be further extended by means of a post-densification chamber 29 which comprises another cylindrical portion 41 which is of the same internal diameter as that of the cylindrical portion 38 of the melt chamber 33. By means of respective peripheral flanges 42 and 43 and bolts (not shown) passing through holes 44 and 45, the cylindrical portions 38 and 41 can be securely and sealingly fixed together with their inner surfaces in alignment as will be more readily apparent from Figure 6.

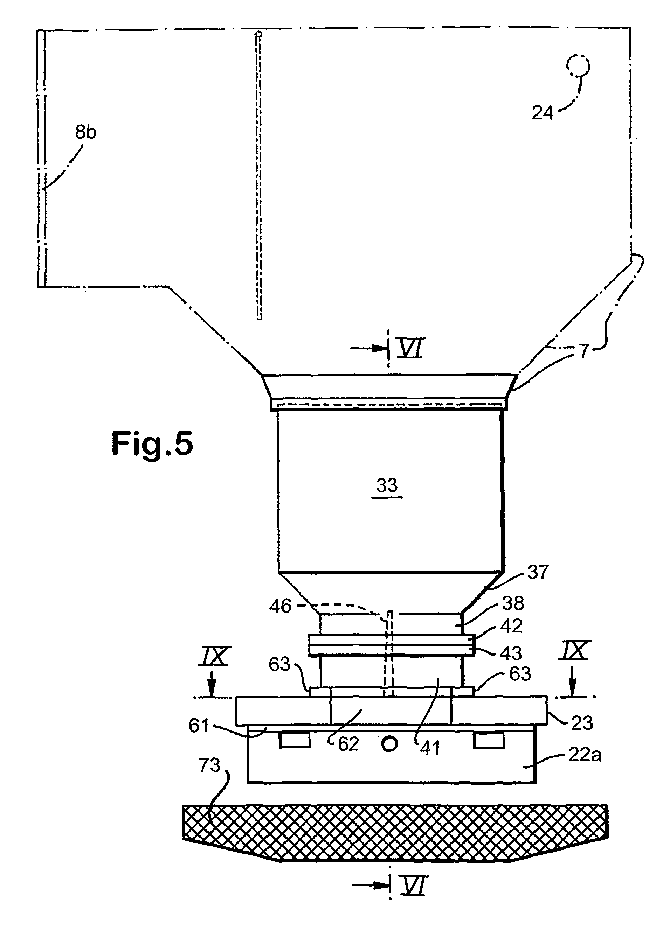

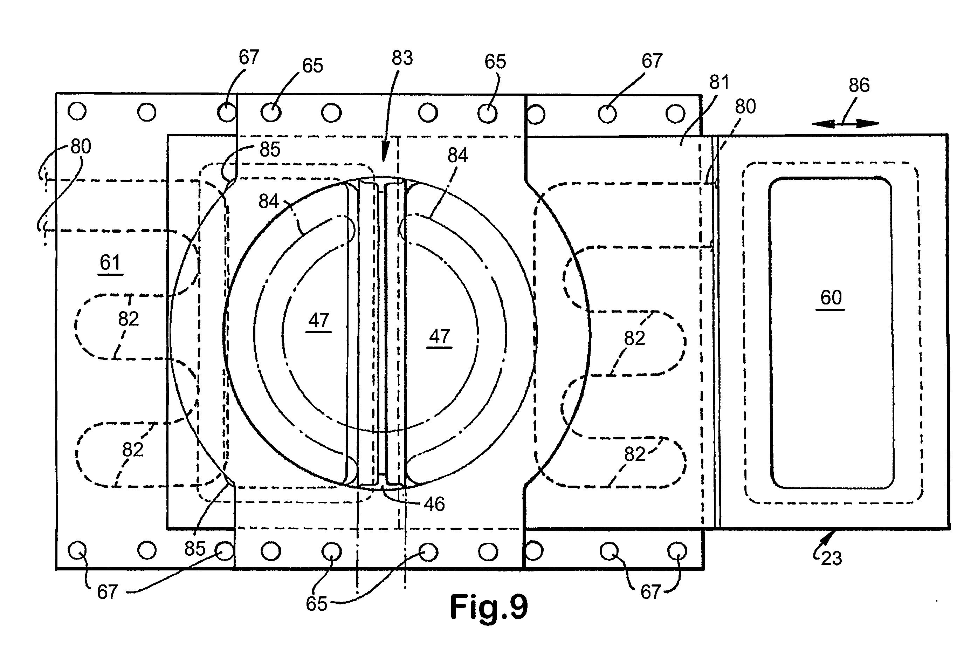

The cylindrical portion 41 carries an integral projection 46 extending upwardly through the hollow interior of the cylindrical portion 41 and into the cylindrical portion 38 where it projects into the melt chamber outlet 39. As can be seen from Figures 5 and 9 the projection 46 constitutes a central web, which extends across the cylindrical portion 41 to split the exit zone into two generally D-shaped outlets 47. Thus, the web-like projection 46 may loosely be called a spider. In order to enable the spider 46 to be inserted into the cylindrical portion 38 of the melt chamber 33, the spider 46 has an upper portion 48 which is of lesser width than its lower portion to provide a clearance 49 between the spider 46 and the inner surface of the cylindrical portion 38. The clearance 49 also exists between the upper part of the cylindrical portion 41 and the spider 46.

Both densification and post-densitication chambers 33 and 29 are of heavy duty cast aluminum to optimize heat transfer by conductivity and radiation and are provided with integrally cast-in electrical resistance tubular heating elements 50 and 51 respectively. Moreover, all working surfaces of both chambers 33 and 29 and of the spider 46 are machined and provided with high temperature polymeric coatings of PTFE having respective thicknesses of about 75 microns and 50 microns. To further optimize on heat transfer the electrical heating elements are located in specific zones and are arranged in a particular manner. As can be seen from the illustrated embodiment in Figure 6, in an entry zone 52 of the densification chamber 33, the electrical heating element or elements is/are more widely spaced apart than in an intermediate zone 53 and exit zone 54 of the densification chamber 33 in which the electrical heating elements 50 are more closely spaced together and in a final or extended exit zone 55.

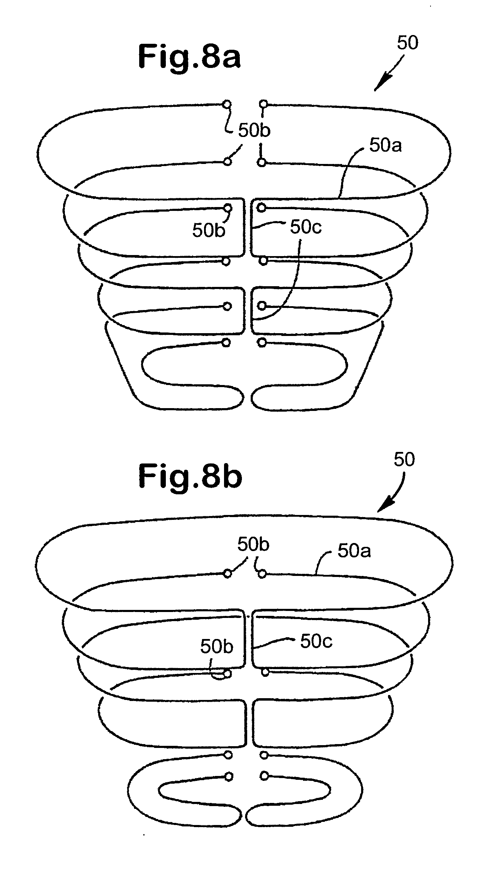

The electrical heating element 51 comprises spirally or helically wound turns which are also relatively closely spaced together and whose ends are connected to the electrical control circuit. All the heating elements 50 and 51 are located closer to the inner surfaces of the cast cylindrical wall portions 38 and 41 of the densification chamber 33 and post-densification chamber 29 than to the outer surfaces of these wall portions, again to maximise heat transfer into the interiors of the two chambers. As can be seen from Figures 8a and 8b, the heating elements which are in the wall portions 32, 37 and 38 of the densification chamber 33 of Figures 4 to 6 comprise a plurality of loops 50a which extend from electrical connections 50b at the open ends of the loops, to the electrical control circuit, like fingers around the chamber 33 to terminate with the closed ends 50c of the loops adjacent each other to minimize the risk of any "cold" spots. The loops 50a extend circumferentially of the chamber 33 in parallel with one another.

The spider 46 is also provided with an integrally cast-in electrical resistance tubular heating element 56 which is arranged in the form of two loops 56a which extend in the transverse direction of the spider as will be apparent from Figure 6. The ends of the looped heating element 56 are, again, connected to the electrical control circuit. By means of the heated spider, heat is brought to the middle or central region of the post-densification chamber 29 and of the outlet region of the densification chamber 33.

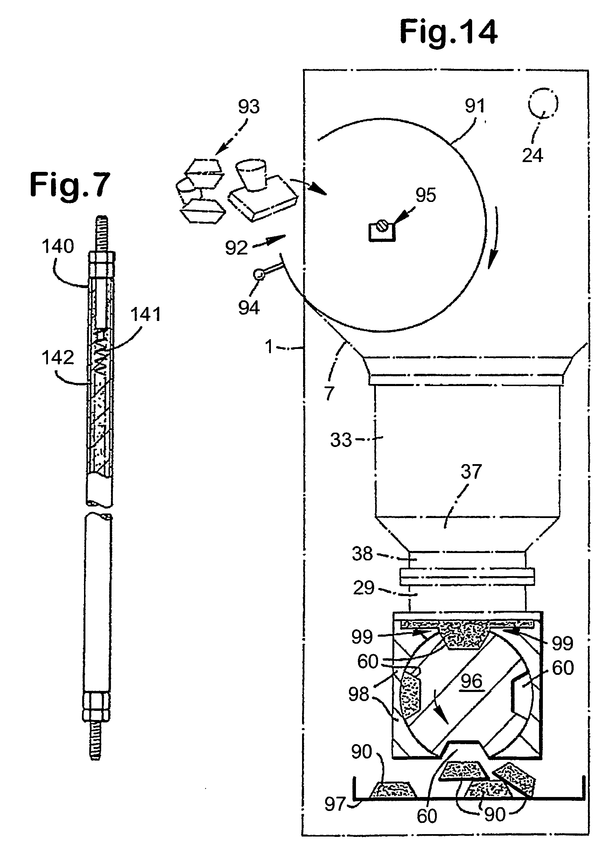

Referring to Figure 7, each electrical resistance heating element 50, 51 and 56 is a tubular sheathed element and comprises a conductive metal outer tube 40 and an inner axially extending spiral resistance wire 141 e.g. of Nickel Chrome with an insulating packing material 142 such as magnesium oxide powder between the wire and the tube. The insulating powder is compressed by reducing the diameter of the tube after assembly.

In order to be able to sense the temperature of melted plastics within the chambers 33 and 29, the chamber walls are provided with thermocouple type melt probe access points (not shown) which are spaced from each other, through which temperature sensing probes (not shown) project into the chambers. Two preferred locations are near the outlet 39 of the densification chamber 33 and in the region of the outlets 47 of the post-densification chamber 29. Such probes would be connected to the temperature gauges such as 10 and 11 in Figure 1 through the electrical control circuit and because of their spacing provide a useful temperature differential to facilitate efficient operation.

An insulating jacket 59 surrounds the densification chamber 33 and most of the post-densification chamber 29, as shown in chain lines in Figures 4 and 6.

Beneath the outlets 47 a solidification or moulding zone is provided by a generally horizontally reciprocable mould cavity support member in the form of the mould plate 23 defining two upwardly tapering or downwardly diverging mould cavities 60. The mould plate 60 slides upon a base plate 61 and is guided for reciprocating movement in the direction of the illustrated arrow heads (Figure 4) between three indexed positions by guide blocks 62. These guide blocks 62 are fixed to the base plate 61 and to respective peripheral flanges 63 which are integral with the cylindrical portion 41 of the post-densification chamber 29 as by bolts (not shown) passing through respective holes 63a 64 and 65 in the flanges 63, the guide blocks 62 and base plate 61 and into threaded bores 66 in the side members 22a of the chassis 22. Further holes 67 and threaded bores are provided in the base plate 61 and chassis members 22a for bolts (not shown) to provide additional fixing. Thus the whole assembly of the chambers 29,33 and load hopper 7 are securely supported on the chassis 22 through the guide blocks 62 and base plate 61.

The dual cavity mould 23 is made in three parts which are of aluminium or of another suitable metal such as stainless steel and which have thermal breaks 70 of a suitable temperature resistant material therebetween. The outer two parts contain the mould cavities 60 and the central part 71 is solid to act as an obturator or slide valve in a manner to be described. Both the upper and lower working surfaces of the mould plate 23 are planar to cooperate respectively with the lower and upper planar working surfaces of the cylindrical portion 41 of the post-densification chamber 29 and of the base plate 61. To facilitate sliding movement of the mould plate 23, and to guard against wear, its upper and lower working surfaces and the lower surface of the cylindrical portion 41 and the side surfaces of the mould plate and cooperating side surfaces of the guide blocks 62 are fully machined and coated with a suitable high temperature high lubricating compound such as PTFE to a thickness of say 25 microns. In a similar manner the upper surface of the base plate 61 is fully machined and coated to say 75 microns with high temperature PTFE.

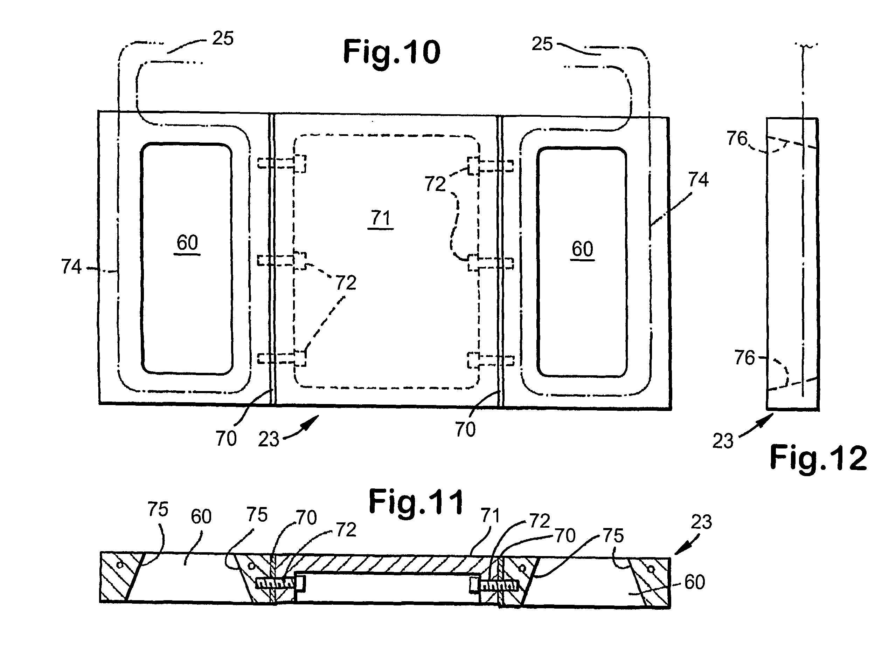

Referring now to Figures 10 to 12, it can be seen that the three parts of the mould plate 23 are fixed together as by bolts 72 passing through holes in the central part 71 and thermal breaks 70 and into threaded bores in those parts defining the mould cavities 60. In order to preserve the integrity of the thermal breaks, either the threaded shafts of the bolts 72 or threaded bores are provided with a coating of non-conductive material, or the threaded bolts are made of a non-conductive material.

Each mould cavity part of the mould plate 23 is provided with its own closed cooling circuit containing a liquid coolant and comprises a duct 25 having a respective loop 74 which is shown in chain lines in Figure 10 and which extends around the relevant mould cavity 60 and is embedded in or integral with the particular mould cavity part. If the plate 23 is cast, the coolant duct loops 74 are integrally cast-in during casting. Each duct 73 is connected to a pump and heat exchanger both of which are not shown for reason of clarity.

Figures 10 to 12 also show the downwardly diverging or upwardly tapering or converging side walls 75 and end walls 76 of the mould cavities 60 which are preferably coated with a polymeric coating of high temperature PTFE to a thickness of say 50 microns. The side (long) walls 75 have a taper angle of 75° and the end (short) walls 76 have a taper angle of 78°.

The mould base plate 61 also has two closed cooling circuits comprising respective ducts 80 connected to respective pumps and heat exchangers also not shown. In the end region 81 of the base plate, the ducts 80 comprise a plurality of loops 82 which are embedded therein as by casting if the base plate is cast to be integrally cast-in therewith. On the other hand, the central region 83 of the base plate 61 is provided with electrical resistance tubular heating elements 84 like the heating elements 50, 51 and 56 and arranged in the form of curved loops 84 which in the plan view of Figure 9, are symmetrically disposed about the spider 46 to be beneath the outlets 47, of the post-densification chamber 29. Obviously, the electrical heating elements as well as the coolant circuit pumps will be connected into the electrical control circuit. Also, thermal breaks (not shown) would be provided in the base plate 61 between the heating loops 84 and cooling loops 82.

Preferably, each coolant duct should be made of a material which has a similar coefficient of expansion to the base metal of the mould plate or base plate.

A collection means for receiving solidified plastics waste blocks from the mould cavities 60 is in the form of a tray, 73, Figures 5 and 6, is disposed beneath the mould plate and projects sideways therebeyond. Such a collection means will be beneath the mould cavity 60 at the left-hand side as illustrated in Figure 9 and project beyond the left-hand end as illustrated in Figure 9 of the base plate 61.

Whenever a mould cavity 60 is in a position in which it is in alignment with either one of the outlets 47 of the post densification chamber 29, vent apertures 85 are uncovered to permit the egress of air from the particular mould cavity 60 and thus from between the mould plate 23 and relevant outlet 47 to ensure that flow of molten plastics waste through the outlet 47 and into the mould cavity is maintained, i.e. is not interrupted.

Provision is made for the mould plate 23 to be indexed in its reciprocating sliding movement on the base plate 61, in each of the directions indicated by the arrow heads 86 illustrated in Figures 4 and 9. To this end, suitable drive means (not shown) are provided which preferably include a fractional HP reversible geared electric motor which is connected into the electrical control circuit through suitable forward and reverse switches such as 12 and 13 in Figure 1 for manual override of automatic indexing according to a preset programmed cycle under the control of the PLC. The electric motor conveniently has an output speed of 2rpm and may be suitable for a relevant mains voltage for the particular country 3 0 involved, e.g. 240 volts 1PH 50 Hz in the UK. A drive shaft which projects from the electric motor runs in appropriate bearings, has two spur gears and a sprocket which meshes with a chain to index the mould plate 23 through a rack and pinion. A slipping clutch and override facility for manual indexing, e.g. by the rotatable handle 21 shown in Figure 1, is advantageously provided in case of need. There are three indexed positions in each direction of movement of the mould plate 23, namely a filling position of a mould cavity, a cooling position of the filled mould cavity and an ejection position for a solidified product formed in that mould cavity.

In this embodiment the control panel has fixed isolator switches for each temperature zone (circuit breakers 19 in Figure 1) a heat temperature controller, a melt temperature controller, heat burnout protection, apparatus state indicator alarms, and on/off electrical mains isolator switches all of which are connected in the electrical control circuit which comprises hard, i.e. high temperature resistant wiring.

The apparatus for Figures 1 to 12 operates in the following manner for say food contaminated EPS waste comprising clamshell containers, food trays and cups used in fast food restaurants. For such EPS articles, the PLC is programmed to provide a melt temperature which does not exceed 210°C and is in the range of 170°C to 210°C to provide for any increase in temperature required, because of the food contamination, beyond the melt temperature of 170°C for uncontaminated EPS. Once the required temperatures have been reached the contaminated EPS waste can be fed into the loading hopper 7 from whence it falls under gravity into the open volume defined by the densification chamber 33. The EPS articles rapidly loose their shape and melt until a reservoir of melted EPS is built up in the exit zone defined by the cylindrical portion 38 of the densification chamber 33 and cylindrical portion 41 of the post densification chamber 29.

Thus there is produced a molten column of contaminated plastics material or flowable plastics melt in the exit zone, which is maintained in a molten flowable condition by the heating elements in the exit zone, not only peripherally in the walls defining the exit zone but also in the spider 46 and in the mould base plate 61. The reservoir provides sufficient dwell time for any food contaminants to be reduced in size by desiccation and fatty substances and liquids to be vaporized and the contaminants to be sterilized. If there are any odours or fumes, these are extracted through the vent port 24 by the fan and rendered harmless by the filtration system. The large cross-sectional area of the exit zone in combination with the heating thereof is sufficient to cause the molten plastics to continuously flow in an ooze-like manner under gravity out of one of the outlets 47 and into one of the mould cavities 60 which has been moved into a filling position by the indexing movement of the mould plate 23, (See the right- hand mould cavity 60 as illustrated in Figure 9) In this filling position, this mould cavity 60 rests on the base plate 61 above one of the heating loops 84 (Figure 9) so that the charge of plastics waste oozing into the mould cavity is heated from the bottom to assist flow in the filling position of this outlet 47. The other outlet 47 is closed by the obturating action of the central part 71 of the mould plate. The thermal breaks in the mould plate and the base plate reduce heating losses which otherwise might occur due to the presence of the coolant circuits therein. Moreover, as the mould cavity is filled, air therein is vented through the vents 85 to ensure that there is no interruption in the continuous ooze-like gravitational flow of the column of contaminated molten plastics waste. The large area of the exit zone enables the apparatus to cope with large contaminants e.g. a whole hamburger which will already be size-reduced by desiccation without interrupting the flow.

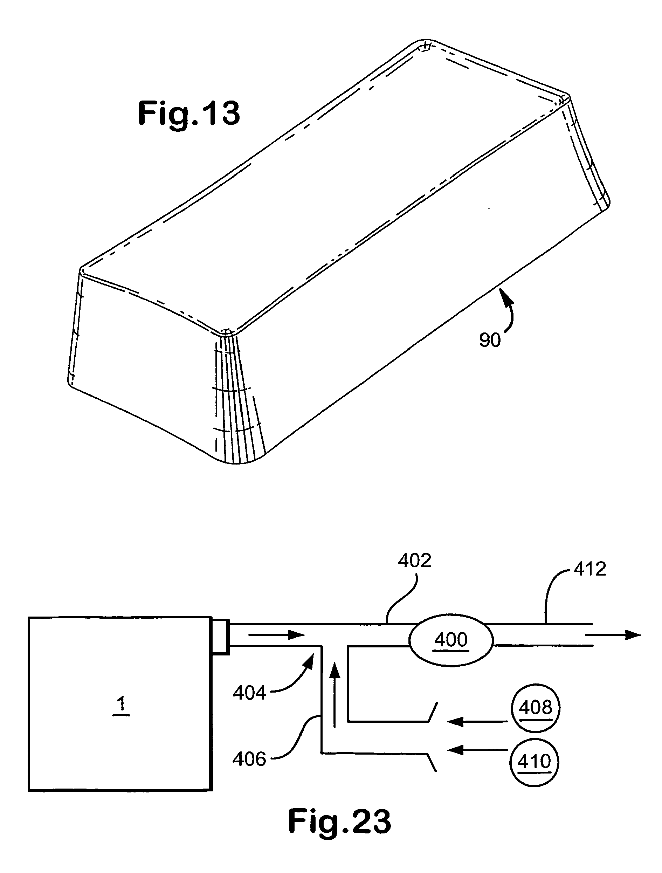

When the mould cavity has been filled in a time predetermined for the cavity to be filled by programming of the PLC, the mould plate is indexed automatically to the cooling position for that filled mould cavity, the movement of the mould plate causing the molten charge of plastics waste to be severed from the molten column of plastics forming the reservoir in the exit zone. In the cooling position, the filled mould cavity is disposed above the right-hand set as illustrated of cooling loops 82 and the central part 71 of the mould plate 23 obturates flow of molten plastics out of the exit zone through both outlets 47. When the time required for cooling of the charge of plastics waste, governed by the PLC, has passed, which is sufficient for the charge to have solidified at least to the point where a cooler skin of plastics has formed around and there is some shrinkage, the mould plate 23 is indexed to the ejection position in which the mould cavity has cleared the base plate. Then the combination of the shrinkage and the downwardly diverging walls of the mould cavity causes a solidified sterile body in the shape of a stackable briquette 90 (See Figure 13) to be ejected by gravity from the mould cavity and into the collection means 73. It will be appreciated from Figure 9 that the ejection position for one mould cavity 60 corresponds to the filling position for the other mould cavity 60.

The relative indexed positions of the mould cavities 60 can be determined by the indicating lights 14 to 18 on the control panel. For example, when either of the outer two lights 14 or 18 is on, a mould cavity is ejecting, when either of the two inner lights 15 or 17 is on, a mould cavity is filling and when the central light 16 is on either of the mould cavities is cooling.

The solidified briquette 90 shown in Figure 13 supports, contains, encapsulates or carries any contaminants therein which have been rendered sterile by the densifying action of the apparatus and can be used for any of the purposes hereinabove referred to.

The embodiment shown in Figure 14 differs from that illustrated in Figures 4 to 12 in that the opening to the loading hopper 7 can be placed, in a loading position, in communication with a rotatable cylindrical shelf or container 91 having an opening 92 through which contaminated waste plastics 93 shown as EPS clamshell containers, cups and a food tray can be placed. Once the waste plastics 93 has been loaded into the container 91, it is turned by hand, as by a handle 94, around its axis to close the loading hopper as well as the cabinet 1 and discharge the EPS plastics waste 93 into the loading hopper 7 from whence it falls under gravity into the densification chamber 33. Such an arrangement prevents direct access into the loading hopper and thus to the densification chamber 33. Moreover, as the container is mounted for rotation on weight sensitive bearings or gimbals such as 95, if any item which is too heavy such as a glass bottle, house brick, small animal or child, which has inadvertently been placed into the container 91 with the plastics waste, these bearings lock up to prevent the container 91 from being turned. Thus, the too heavy items can then be removed.

Instead of the reciprocable dual cavity mould plate 61, a circular in cross section mould carrier member 96 which is rotatable about a generally horizontal axis is provided. Such a mould carrier member 96 has four mould cavities 60 therein and is indexable by suitable drive means through filling, cooling, ejecting and empty position as will be apparent from the drawings. Ejection still occurs under gravity but the filling takes place through the wider entry opening through which the solidified plastics briquettes 90 are also ejected by gravity onto a collection tray 97, as the bottoms of the mould cavities 60 are closed. The cooling circuit (not shown) in this instance is located in a curved surrounding cooperating member 98 at the left hand side, as illustrated of the drawings. To assist flow of the molten plastics, additional heating elements (not shown) may be provided in the member 98 where indicated at 99. Moreover, venting apertures (not shown) for allowing the egress of air from the mould cavity 60 so as not to interrupt the flow are provided.

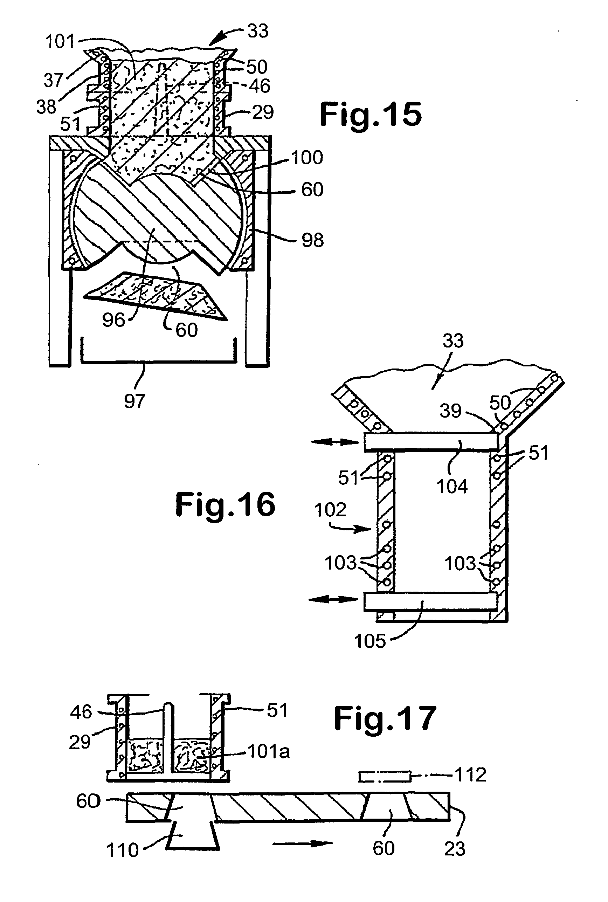

In the modification of Figure 16, the spider is omitted and instead there is a post-densification or outlet chamber 102 which is of shorter length than those of previous embodiments since heating only takes place in the upstream region of the post densification chamber adjacent the outlet 39 thereof. Solidification in this modification is achieved with a cooling duct 103 which is embedded as by casting in a region which extends somewhat from the middle region of the chamber 102 to the downstream end region thereof. Thus the heated exit zone merges into the solidification zone without a break once the chamber 102 has been filled with a charge of molten plastics through the outlet 39 with a slide valve 104 in an open position. This slide valve is closed and then with the slide valve 105 closed at the outlet of the chamber 102, the molten plastics in the column adjacent the cooling ducts 103 is cooled sufficiently to cause some shrinkage of the plastics, the time for which can be preset by the PLC. At this point, both slide valves 103 and 104 are opened so that the solidified portion of the column is pushed out of the chamber 102 by gravity and is replaced by molten plastics whereupon the valve 105 is closed to sever the solidified body from the molten plastics now occupying space adjacent the cooling ducts 103 and the valve 104 is closed. The solidified body which has a cross-sectional shape which corresponds to that of the chamber 102 falls under gravity into a suitable collection means.

Although the apparatus that have been described are is intended primarily for the densification of plastics waste, contamination with non-plastics objects commonly occurs; for example, wooden tongue depressors and metal needles amid medical plastics waste, or foodstuffs such as hamburgers that may be discarded with plastic clamshell containers in a restaurant environment.

A particular problem has been recognised in that frequently, common soft drinks cans (i.e. height ≈ 120mm, diameter ≈ 65mm) contaminate plastics waste and, due to their size, are not readily accommodated by the mould plates previously described. Applicant therefore set about developing a mould that would be able to encapsulate such drinks cans within solidified briquettes of densified plastics waste.

Whilst enlarging the standard mould/briquette did produce a satisfactory result in terms of accommodating such a contaminant, Applicant found that a cylindrical mould or, more specifically, a discoidal mould (and therefore briquette) was more preferable. Such a disc shaped briquette has a high surface area to volume ratio relative to a standard shaped briquette and the molten plastics cools faster as a result, thus allowing improved throughput of plastics by the densifying apparatus. More specifically, Applicant has discovered that a briquette in the shape of a disc having a diameter of around 400mm and a depth of around 150mm is particularly advantageous.

Disc shaped briquettes are readily stackable and therefore are suitable for transportation and storage. The disc may be either discus shaped, i.e. tapered towards its periphery or have rectangular edges. If the plastics waste has been passed through a shredder, as will be described later, any soft drink cans amongst the waste will usually be flattened or their volume at least reduced. This is preferable because it allows thinner briquettes to be produced that cool more quickly than discs of similar diameter but greater thickness.

As mentioned earlier with reference to Figures 4 to 12, whenever a mould cavity 60 is in a position in which it is in alignment with either one of the outlets 47 of the post densification chamber 29, vent apertures 85 are uncovered to permit the displacement of gas from the particular mould cavity 60 and thus from between the mould plate 23 and relevant outlet 47 to ensure that flow of molten plastics waste through the outlet 47 and into the mould cavity is maintained, i.e. is not interrupted. Although, the provision of vents 85 allowed the displacement of gas from the mould cavity 60 as it fills with molten plastics waste, this does not have any material effect upon reducing the occurrence of bridging.

Therefore, Applicant looked into ways reducing bridging which included using different kinds and locations of vents. While not wishing to be bound by any particular theory, Applicant believes that the released gases, in particular from melting plastics with a high gas content such as EPS, build up within the molten plastic stream and effectively become a barrier that insulates certain portions of the stream from heat output from the heating elements. This contributes to bridging within the plastics melt and so may retard the flow of plastics through the densifying apparatus of Figure 4 to 12. This phenomenon has been observed as evident particularly in the melt chamber followed by a dwell chamber having a single blade or "spider" bisecting its cylindrical volume.

Applicant found that by introducing either a very small air vent, or a plurality of such vents, into the outlet or exit zone of the apparatus decreased the effects of bridging and increased the throughput of plastics through the densifying apparatus. This was particularly surprising to the Applicant because it was believed that bridging was a problem more associated with the portions of the molten plastics stream that were located away from the heated walls of the chamber, and Applicant did not expect the provision of vents in the side of the chamber to have such a dramatic effect, especially vents of a small size.

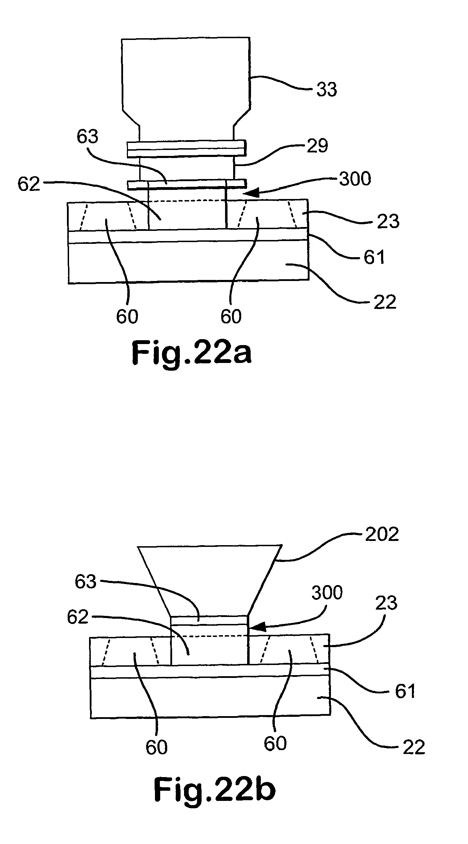

Figure 22a shows an embodiment of the invention, as applied to the apparatus as described in Figures 4 to 12 and in which similar parts are denoted by the same reference numerals. In the embodiment, a vent or air gap 300 is located immediately upstream of the moulding plate 23. It should be appreciated that the width of the vent is greatly exaggerated in the diagram. The vent 300 is of the form of a 0.5 mm gap extending circumferentially around the base of the post-densification or dwell chamber 29 and allows air, but not molten plastics, to escape from within. The width of the vent 300 is determined by the height difference between the guide blocks 62 and moulding plate 23 and its width must be selected so as to allow as much air as possible to escape whilst preventing leakage of molten plastics. Thus, adjustments to the height of guide blocks 62 will alter the width of the vent. If the vent is too large, molten plastics will either leak out of the melt chamber and continue to do so, or solidify once out of the melt chamber, thus sealing the vent and preventing further escape of gas.

It is worth mentioning at this point that vents of similar form or otherwise may be located at other points in the melt chamber where bridging is likely to occur. However, Applicant identified through experimentation that a significant reduction in bridging, thus an increased throughput of plastics waste, could be achieved by locating the vent between the mould plate 23 and the post- densification chamber 29 as described.

Since different molten plastics have different degrees of viscosity, some molten plastics may leak from a particular size of vent while others may not. It is therefore important that the vent be of a size that will work for a variety of molten plastics waste. A vent width of 0.4 - 2.5 mm is a preferred range and is large enough to allow sufficient air to escape in order to prevent bridging of molten plastic streams formed from most common types of plastics waste. Most preferably the vent 300 is a width of 0.4 - 0.6 mm. The vent 300 can also be tailored for apparatus intended to generate molten plastics streams that are either too fluid for the above sized vent, or not fluid enough, that is to say vents of a larger or smaller size than the above stated range may be employed.

It will be apparent to a person skilled in the art that the width of the vent 300 will increase and decease in accordance with expansion and contraction of the densifying apparatus as it heats and cools. It follows that the vent should be of the preferred size when the apparatus is at operating temperature. In the preferred embodiment, the vent 300 effectively is closed when the densifying apparatus of the invention is not in use and the vent enlarges to a width of approximately 0.5 mm when the apparatus is at operating temperature.

The gases released from the vent 300 are contained within the sealed cabinet 1 of the densifying apparatus for subsequent removal and processing. In Applicant's earlier patent application No. US 5,240,656, which has been described previously for completeness and shown in Figure 1, an exhaust port 24 is provided in the side panel 2 of the cabinet 1, the cabinet 1 being sealed such that gases may only escape from the exhaust port 24. In Applicant's previous invention, the exhaust port 24 allows odours, noxious fumes and other gases that may be produced as a by-product of the densifying process to be removed and so is connectable with an conventional extraction and filtration system.

Applicant considered that although the exhaust flue of such an apparatus could be connected to a conventional extraction and filter system, this would impose a further burden on such a system which may already be responsible for processing the output from air-conditioning units, kitchen extraction systems, sanitary extraction systems and the like. It is therefore easy to appreciate that the addition of a densifying apparatus exhaust will add to the maintenance cost of a conventional filter system which led Applicant to investigate how such issues may be dealt with.

Plasma technology may used to remove odours and volatile organic compounds that are generated by way of the densifying process. Plasma technology provides an efficient means of removing such compounds from air but usually is prohibitively expensive to be employed merely to remove such compounds produced from devices such as apparatus for waste plastics management. Plasma technology may be incorporated into the apparatus of Figure 22a and 22b not only to remove odours and VOCs produced by the plastics densifying process but also to remove odours, VOCs and other airborne pollutants from the general environment in which it is located. This is especially useful in environments such as commercial kitchens or within the confines of a ship in where space is at a premium.

Applicant has recognised that when plasma technology is used in this way the need for conventional air filters can be eliminated, or at least the burden imposed upon conventional air filters can be reduced significantly. Therefore, tangible benefits are realised; firstly in terms of cost savings associated with the reduced maintenance requirement of conventional air filters and secondly in terms of the reduced fire hazard presented by the residues of fats and oils that conventional air filters necessarily remove from passing air.

A filter employing atmospheric pressure non-equilibrium plasma (APNEP) to filter odours and VOC's that can be incorporated into the apparatus of Figures 22a and 22b is shown in Figure 23 to which reference shall now be made.

The plasma is generated in a vessel constituted by a reactor 400 in exhaust ducting 402 leading away from the densifying apparatus 1 and is microwave induced to create a gas temperature of 2200 - 5000 °C at a pressure of less than 10 mBar. Waste gases are drawn into the reactor 400 primarily by convention and assisted by a fan (not shown) disposed downstream of the cabinet 1 and reactor 400. At this temperature, any odour, smoke or VOC's are vaporised and the exhaust gases are rendered clean and harmless. A junction 404 is provided upstream of the reactor 400 and connects a secondary ducting 406 to the ducting 402 to deliver dirty air flow from such devices as air conditioning units 408 and kitchen extraction systems 410. Cleaned air is then output from the reactor 400 through a suitable final exhaust ducting 412 to atmosphere.

Besides the removal and elimination of gases, odours and the like, it is of prime importance to ensure a high throughput of plastics waste so that such an apparatus is a commercially viable option.

Returning now to the production of a controlled plastics melt and as has been mentioned, it is important to ensure that the molten plastics waste has a uniform temperature throughout in order to encourage a relatively free flowing plastics stream and to prevent bridging. In this sense, US 5, 240,656 discloses that at least the lower portion of the melt chamber preferably is free of obstructions to facilitate downward movement of the plastics material and flow of the molten plastics material through the chamber outlet. To this end, the post densification chamber 29 was included. However, the fluidity of the molten plastics is compromised as the heat emanating from the walls of the melt chamber and/or the dwell chamber can still prove to be insufficient to prevent bridging.

In order to ensure a thorough distribution of heat to a molten plastics stream large enough to have portions of differing temperature, a mechanical mechanism such as a stirring paddle (not shown) may be incorporated to provide a mixing effect. While such mechanisms can be very effective, they also tend to be expensive; firstly in terms of initial cost and secondly in terms of the sustained maintenance costs.

However, the thorough distribution of heat is more completely and cost-effectively achieved by means of the embodiment of Figure 22b of which the melt chamber 202 incorporates a plurality of heating members 204 (see Figures 24a and 24b) which can be used to create a mixing effect for the plastics waste.

This is a surprisingly convenient and cost effective manner of ensuring sufficient mixing of the molten plastics to prevent bridging which benefits the throughput of plastics waste.

Referring more particularly to Figure 22b, the melt chamber 202 is mounted upon the chassis 22, base plate 61 mould plate 23 and guide blocks 62 of the apparatus as described previously. The melt chamber 202 replaces the melt chamber 33 of the embodiment of Figure 22a and the post-densification chamber 29 has been omitted so that in this case the air gap 300 is between the melt chamber 202 and the mould plate 23.

The melt chamber 202 of Figure 22b is shown in more detail in Figures 24a and 24b. It should be appreciated that by virtue of the advantageous features of the melt chamber 202, as will be described, the need for the post-densification chamber 29 of Applicant's previous invention is obviated.

The melt chamber 202 has a rectangular horizontal cross section and a non uniform heating surface constituted by a plurality of heating members in the form of substantially planar fins 204 removably mounted in opposing walls of the melt chamber 202 and extend transversely therebetween with respect to the direction of flow. The fins 204 also extend longitudinally through the internal volume of the melt chamber 202 in side-by-side spaced apart relationship so that the oppositely facing surfaces of the fins 204 are approximately parallel to each other. The fins 204 are arranged so that their tips protrude from the melt chamber 202 and into the entry zone of the melt chamber 202 by a different amount with respect to adjacent fins 204 so as to present a non-uniform thermal surface to the plastics waste entering the melt chamber 202.

The melt chamber 202 has a rectangular horizontal cross section thereby presenting a greater surface area of longitudinally arranged fins 204 to the molten plastics inside the melt chamber 202 than would be possible in a melt chamber of circular horizontal cross-section like that in Figure 22a. The opposing walls of the melt chamber 202 taper or converge in a downstream direction, relative to the direction of flow of plastics waste, and are inclined at an angle of 15-45° from the vertical, although the optimum angle is 30°. The converging walls slow the passage of the plastics waste through the melt chamber 202 and thereby improve the consistency of the melt by helping to ensure that a high proportion of the plastics waste melts and becomes densified for any given temperature of the melt chamber.

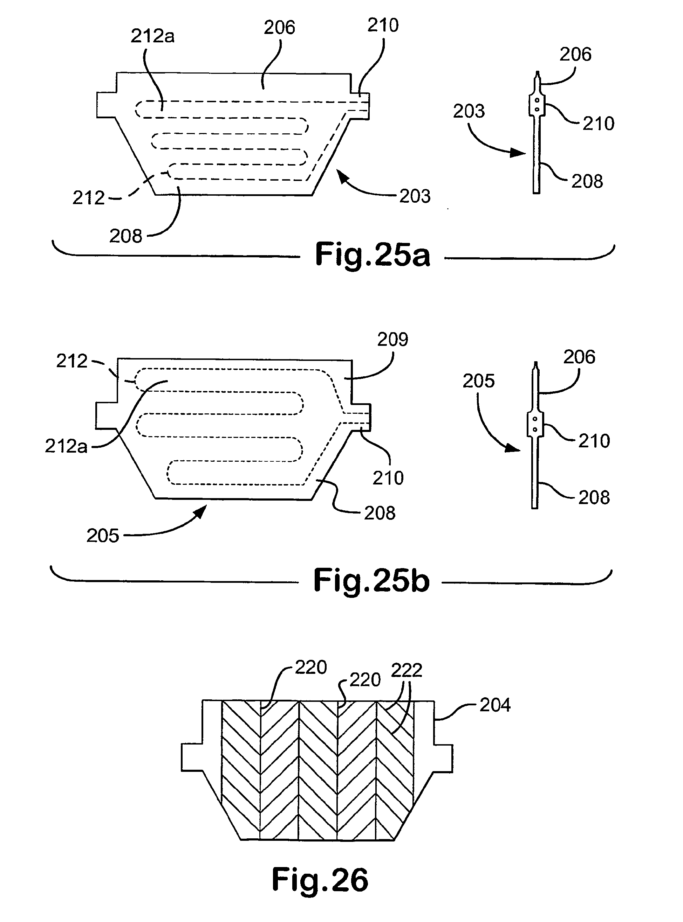

Figures 25a and 25b show a detailed view of the fins 204. Figure 25a shows a side view and an edge view of a "short" fin 203, having a rectangular leading edge portion 206 a trapezoidal trailing edge portion 208. Lugs 210 delineate the leading and trailing edge portions 206, 208 of the fin 203 and are cooperable with associated receiving grooves 211, which are defined by the walls 201 of the melt chamber 202, when the densifying apparatus is assembled.

A "tall" fin 205 is shown in Figure 25b and differs from the short fin 203 by way of an extended leading edge portion 209 so as to protude further from the melt chamber 202 and into the receiving hopper (not shown) compared with the short fins 203.

The fins 203, 204, 205 are provided with electrical resistance heating elements 212 embedded in the highly conductive material of the fin as by casting in a similar manner to that described with reference to Figure 6 in relation to the projection 46. The heating elements 212 comprise three loops 212a which extend in the transverse direction of the fin, relative to the direction of waste plastics flow, as will be seen from Figures 25a and 25b. The ends of the heating elements terminate at one of the lugs 210 and are arranged so that electrical connection is made to the electrical control circuit when the fins are installed into the melt chamber 202.

The loops 212a of the heating elements are disposed evenly within the fin to minimise hot spots or cold spots.

The highly conductive material of the fins 203, 204, 205 may be the same or similar to the highly conductive material of the melt chamber 202 and in any case should preferably be selected so that the coefficients of expansion are similar or the same. The fins may be produced from alloys that permit heating at much higher temperature, bronze alloy for example, without the possibility of distorting the fins that may be possible with low temperature resistance alloys such as aluminium alloy.

The fins 204 are disposed and constructed in such a way and are presented to the plastics waste in a variable fashion so as to cause the plastics waste to tumble unevenly into the melt chamber 202. This obviates the problems that Applicant experienced with a series of identical fins that presented a uniform thermal surface to the plastics waste. With the uniform thermal surface presented by such identical fins, the plastics waste tends to accumulate on the tips of the fins to such an extent as to melt and create a seal-like bridge which obstructs the entry of plastics waste further.

In Figure 26, the surfaces of the fins 204 are provided with a series of six recessed channels 220 running longitudinally along the surface of the fin 204. The recessed channels 220 are arranged approximately parallel to and in an equi-spaced relationship with adjacent ones of the recessed channels 220. A plurality of transverse diagonal channels 222 are defined intermediate the longitudinal channels 220 and the resulting arrangement is akin to a plurality of chevron-like formations which have the effect encouraging still further the flow of molten plastics past the surfaces of the fins 204.

In order to present a large heated surface area to the plastics waste within the melt chamber, it is preferred that the melt chamber 202 incorporates a relatively high number of fins. In a proposed commercial embodiment based on Figures 24a and 24b the melt chamber has a volume of 500 cubic centimetres (cc) and includes twenty fins. By supplying 15 kilowatts (kW) of power to the melt chamber (including fins), in excess of 100 kg per hour of plastics can be processed. Typically, power supply is increased, for example to 30 kW, for the initial "warm-up" phase of the melt chamber and then decreased to a steady state value.

The plastics waste comprising one or more plastics types passes through the melt chamber 202 whereby at least some of the waste plastics are heated, more specifically those with a lower melting point, until an at least partially molten flowable plastics melt is formed. Thus the flowable plastics melt will comprise molten and non-molten plastics waste. The flowable plastics melt then passes through the outlet of the melt chamber and into a mould cavity 60 of the cooling zone, where it is allowed to cool and solidify.

The above stated throughput of plastics waste is substantially greater than that achieved by the embodiment of Figures 4 to 12. As discussed above, it is preferable that the fins are in some form of irregular arrangement so as to present a non-uniform thermal surface and encourage mixing of the plastic. Indeed, bridging can even increase in the face of a regular arrangement of fins, despite the increase in heated surface area.

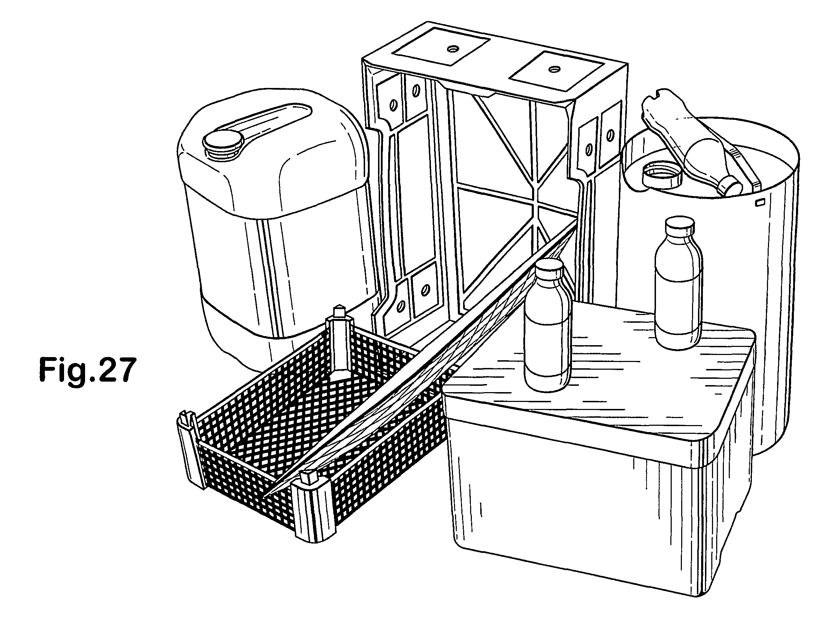

Although the provision of a plurality of fins ensures efficient heat absorption throughout the molten plastics stream, it will be appreciated that in certain applications, there exists the potential for variety of plastics types to be loaded into the apparatus for densification. Figure 27 exemplifies the variety of waste that such an apparatus of Figures 22a and 22b may be required to process.

Some plastics types may have substantially different flash points or decomposition points, hereinafter collectively termed flash points (i.e. the temperature at which a particular type of molten plastic will decompose or ignite spontaneously). Moreover, some plastics have melting points well in excess of the flash point of other types of plastics. So, as mentioned earlier, it is important to control the temperature of the melt in order to guard against carbonization of the plastics waste.

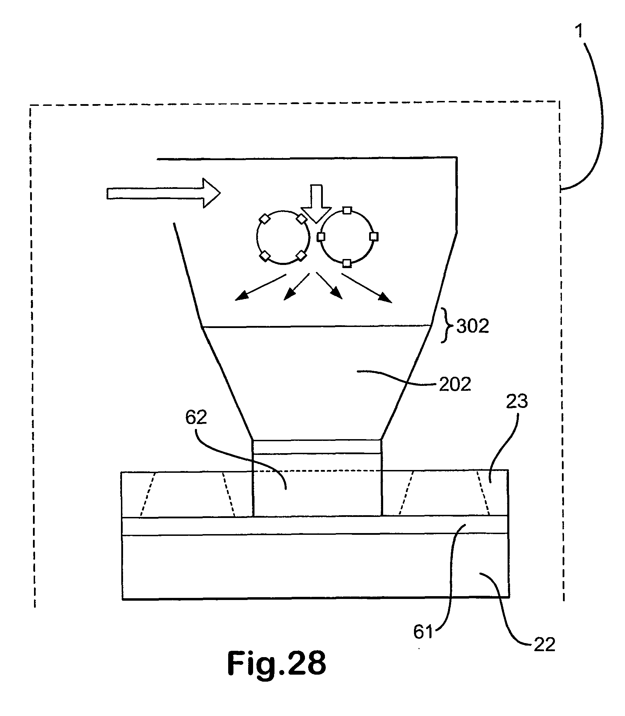

The embodiment of Figure 28 differs from the embodiment of Figure 22b in that shredding means 300, such as a rotary shaft shredder 300 is disposed in the entry zone 302 defined by the loading hopper 7. The loading hopper 7 is arranged so that the waste plastics fed into the apparatus are passed through the shedder 300 and so waste plastics items with a high volume to weight ratio, such as drinks bottles or EPS blocks, are fragmented before the densifying process begins. Since the shredder 300 is located within the loading hopper 7, there is no need to reduce in size large pieces of plastics wastes before they are fed into the apparatus.

The shredder 300 provides a convenient way of reducing the size of plastics waste that may be introduced to the apparatus and so the molten plastics waste encapsulates and supports the non-molten plastics waste more readily. However, if the size of the plastics waste is sufficiently small, the shredder may be omitted.

A particular benefit of the embodiments of the invention hereindescribed is that the molten plastics waste and those portions that have not melted, are all sterilised so that when the mixture is cooled in the mould chamber a sterile briquette is formed.

If the melt chamber 202 of the above described embodiment is caused to raise the temperature of the plastics waste to 180°C, several types of plastics will be caused to melt. However, the operating temperature will still be below the melting point of other plastics types, PET for example. The molten plastics therefore become sterile due to their elevated temperature and heat from the molten plastics will be passed to the non-molten plastics thereby rendering them sterile also. The effect of sterilization is of particular importance to medical waste for instance, within which microbes, bacteria and viral loads may be carried.

Since the temperature of the melt chamber 202 is controllable, the operating temperature of the melt chamber 202 can be adjusted to be suitable for a particular type of plastics, for those users with a common make-up of plastics waste. Accordingly, maximum densification and sterilization of the waste plastics can be achieved.

It will be appreciated that various modifications may be made without departing from the scope of the invention as defined in the appended claims.

Although the embodiments described with reference to Figures 22a and 22b generally ulilise a mould plate to receive molten plastics and for the formation of cooled briquettes, it is not essential for the at least semi-molten plastics to be placed in a mould. Instead, they may simply be allowed to flow free from the melt chamber. Such a process has advantages in reducing bridging within the melt chambers. However, the use of a mould is most preferred because it provides an appropriate means to contain the at least partially molten plastics and also provides a means to shape the final product to a form that is useful for transport or storage.

With reference to Figures 24a and 24b, although it is preferred that the fins 204 are separable from the melt chamber as described herein, the fins and the melt chamber may equally be integral with one another e.g. an integral cast member. In addition, instead of the chevron formations being machined into the surface of the fins 204, the chevron formations may be constituted by ridges.

## Claims

1. An apparatus for treating a volume of plastics waste, the apparatus including:
a melt chamber (202) having an inlet for receipt of plastic waste and an outlet downstream of the inlet, the melt chamber (202) defining a heating zone for receiving and heating a volume of plastics waste;
heating means (50,51,204) for bringing the temperature of the melt chamber to a pre-determined level and for heating the volume of plastics waste to a temperature at which at least some of the volume of plastics waste is melted to form a flowable plastics melt;
**characterised in that** the heating means includes a plurality of substantially planar fins (204) extending between opposing walls of the melt chamber (202) transversely to the flow of plastics waste and are arranged so that their tips protrude through the inlet of the melt chamber (202) into an entry zone of the melt chamber (202) by a different amount with respect to adjacent fins (204) so as to create a non-uniform thermal surface in the region of the melt chamber inlet.

2. An apparatus according to claim 1, wherein the plurality of fins (204) are disposed and constructed in such a way and are presented to the plastics waste in variable fashion so as to cause the plastics waste to tumble unevenly into the melt chamber (202).

3. An apparatus as claimed in claim 1 and/or claim 2, wherein the fins (204) have a leading edge near the inlet of the melt chamber and a trailing edge near the outlet of the melt chamber.

4. An apparatus as claimed in claim 3, wherein the leading edges of alternate fins (204) terminate at different upstream locations relative to the leading edges of adjacent fins (204) to provide a non-uniform thermal surface.

5. An apparatus as claimed in any one of claims 1 to 4, wherein the opposing walls of the melt chamber are oppositely facing side walls and wherein the fins (204) extend between and are removably supported by the side walls.

6. An apparatus as claimed in any one of claims 1 to 5, wherein the fins (204) have at least one electrical resistive heating element embedded therein.

7. An apparatus as claimed in any one of claims 1 to 6, further including cooling chamber means disposed downstream of the melt chamber outlet and defining a cooling zone for receiving and cooling the flowable plastics melt.

8. An apparatus as claimed in claim 6, the cooling chamber means being defined by at least one mould cavity for forming a solidified body of plastics waste, and optionally wherein the or each mould cavity is of discoidal form having dimensions selected to enable a drinks can to be encapsulated by the solidified body of plastics waste in the mould cavity.

9. An apparatus as claimed in any one of claims 1 to 8, further including means for fragmenting the plastics waste prior to the plastics waste entering the melt chamber.

10. An apparatus as claimed in claim 9, wherein the fragmenting means is disposed upstream of the melt chamber inlet.

11. A method of treating a volume of plastics waste, including:
providing a volume of plastics waste comprising one or more plastics types, the or each of the plastics types having a melting point and a flash point;
providing a heating zone having an inlet and an entry zone into which the volume of plastics waste is feedable and an outlet downstream of the inlet relative to the direction of flow of plastics waste;
bringing the heating zone to a predetermined operating temperature, the operating temperature being selected so as to be less than the flash point of the one or more plastics types to avoid causing carbonisation of plastics waste;
allowing the volume of plastics waste to fall from the entry zone through the inlet and into the heating zone under the influence of gravity;
creating a non-uniform thermal surface in the region of the inlet of the heating zone by providing a plurality of substantially planar fins (204) extending between opposing walls of the melt chamber (202) transversely to the flow of plastics waste to facilitate the flow of plastics waste through the heating zone, where the fins (204) are arranged so that their tips (204) protrude through the inlet of the melt chamber (202) into an entry zone of the melt chamber (202) by a different amount with respect to adjacent fins (204);
heating the plastics waste in the heating zone to a temperature at which at least some of the volume of plastics waste is melted to form a flowable plastics melt;
causing the flowable plastics melt to flow from the heating zone to the outlet under the influence of gravity.

12. A method as claimed in claim 11, wherein the plurality of fins (204) have tapered leading edges terminating at different heights in the region where the entry zone leads into the heating zone.

13. A method as claimed in claim 11 or claim 12, further including allowing the flowable plastics melt to flow into a cooling zone during which gas is allowed to escape to facilitate the flow of the plastics melt and causing the flowable plastics melt to solidify.

14. A method as claimed in claim 13, wherein the flowable plastics melt is formed into sterile, shaped and stackable solidified bodies of plastics waste in the cooling zone.

15. A method as claimed in any one of claims 11 to 14, further including fragmenting the plastics waste prior to the plastics waste entering the heating zone.

16. A method as claimed in claim 15, wherein fragmenting the plastics waste occurs within the entry zone.

17. A method as claimed in claim 15 or claim 16, wherein fragmenting the plastics waste is carried out by a shredding action.

18. A method as claimed in any one of claims 11 to 17, further including filtering fumes released when the plastics waste is heated and filtering air outside the entry zone, heating zone and cooling zone by utilizing atmospheric pressure non-equilibrium plasma technology.

## Patentansprüche

1. Vorrichtung zum Behandeln eines Volumens von Kunststoffabfällen, wobei die Vorrichtung Folgendes umfasst:
eine Schmelzkammer (202), die einen Einlass zum Aufnehmen von Kunststoffabfällen und einen Auslass hinter dem Einlass hat, wobei die Schmelzkammer (202) einen Erwärmungsbereich zum Aufnehmen und Erwärmen eines Volumens von Kunststoffabfällen definiert;
Erwärmungsmittel (50, 51, 204) zum Bringen der Temperatur der Schmelzkammer auf ein vorgegebenes Niveau und zum Erwärmen des Volumens von Kunststoffabfällen auf eine Temperatur, bei der zumindest ein Teil des Volumens von Kunststoffabfällen geschmolzen wird und eine fließfähige Kunststoffschmelze bildet;
**dadurch gekennzeichnet, dass** das Erwärmungsmittel mehrere im Wesentlichen planare Rippen (204) umfasst, die sich zwischen einander gegenüberliegenden Wänden der Schmelzkammer (202) quer zum Strom von Kunststoffabfällen erstrecken und so angeordnet sind, dass ihre Spitzen durch den Einlass der Schmelzkammer (202) in einen Eintrittsbereich der Schmelzkammer (202) um einen unterschiedlichen Betrag gegenüber benachbarten Rippen (204) vorragen, um so eine ungleichförmige thermische Fläche im Bereich des Schmelzkammereinlasses zu erzeugen.

2. Vorrichtung nach Anspruch 1, wobei die mehreren Rippen (204) so angeordnet und aufgebaut sind und sich den Kunststoffabfällen in variabler Weise darstellen, um zu bewirken, dass die Kunststoffabfälle ungleichmäßig in die Schmelzkammer (202) stürzen.

3. Vorrichtung nach Anspruch 1 und/oder 2, wobei die Rippen (204) eine Vorderkante in der Nähe des Einlasses der Schmelzkammer und eine Hinterkante in der Nähe des Auslasses der Schmelzkammer haben.

4. Vorrichtung nach Anspruch 3, wobei die Vorderkanten von abwechselnden Rippen (204) an unterschiedlichen stromaufwärts gelegenen Orten relativ zu den Vorderkanten von benachbarten Rippen (204) enden, um für eine ungleichförmige thermische Fläche zu sorgen.

5. Vorrichtung nach einem der Ansprüche 1 bis 4, wobei die einander gegenüberliegenden Wände der Schmelzkammer entgegengesetzt weisende Seitenwände sind und wobei die Rippen (204) sich zwischen den Seitenwänden erstrecken und abnehmbar von denselben gestützt werden.

6. Vorrichtung nach einem der Ansprüche 1 bis 5, wobei die Rippen (204) mindestens ein elektrisches Widerstandsheizelement haben, das darin eingebettet ist.

7. Vorrichtung nach einem der Ansprüche 1 bis 6, die ferner ein Kühlkammermittel umfasst, das hinter dem Schmelzkammerauslass angeordnet ist und einen Kühlbereich zum Aufnehmen und Kühlen der fließfähigen Kunststoffschmelze definiert.

8. Vorrichtung nach Anspruch 6, wobei das Kühlkammermittel durch mindestens einen Formhohlraum zum Bilden eines erstarrten Körpers von Kunststoffabfällen definiert wird und wobei optional der oder jeder Formhohlraum eine Scheibenform besitzt, die Abmessungen hat, welche so gewählt sind, dass eine Getränkedose durch den erstarrten Körper von Kunststoffabfällen in dem Formhohlraum eingeschlossen werden kann.

9. Vorrichtung nach einem der Ansprüche 1 bis 8, die ferner Mittel zum Zerkleinern der Kunststoffabfälle umfasst, bevor die Kunststoffabfälle in die Schmelzkammer eintreten.

10. Vorrichtung nach Anspruch 9, wobei das Zerkleinerungsmittel oberhalb des Schmelzkammereinlasses angeordnet ist.

11. Verfahren zum Behandeln eines Volumens von Kunststoffabfällen, umfassend:
Bereitstellen eines Volumens von Kunststoffabfällen, das ein oder mehrere Arten von Kunststoffen umfasst, wobei die oder jede der Arten von Kunststoffen einen Schmelzpunkt und einen Flammpunkt hat;
Bereitstellen eines Erwärmungsbereichs, der einen Einlass und einen Eintrittsbereich hat, dem das Volumen von Kunststoffabfällen zugeführt werden kann, und einen Auslass hinter dem Einlass relativ zur Richtung des Stroms von Kunststoffabfällen;
Bringen des Erwärmungsbereichs auf eine vorgegebene Betriebstemperatur, wobei die Betriebstemperatur so gewählt wird, dass sie niedriger als der Flammpunkt der einen oder mehreren Arten von Kunststoffen ist, um eine Verkohlung von Kunststoffabfällen zu vermeiden;
Gestatten, dass das Volumen von Kunststoffabfällen vom Eintrittsbereich durch den Einlass und in den Erwärmungsbereich unter dem Einfluss von Schwerkraft fällt;
Erzeugen einer ungleichförmigen thermischen Fläche im Bereich des Einlasses des Erwärmungsbereichs durch Bereitstellen mehrerer im Wesentlichen planarer Rippen (204), die sich zwischen einander gegenüberliegenden Wänden der Schmelzkammer (202) quer zum Strom der Kunststoffabfälle, um den Strom von Kunststoffabfällen durch den Erwärmungsbereich zu erleichtern, erstrecken, wobei die Rippen (204) so angeordnet sind, dass ihre Spitzen (204) durch den Einlass der Schmelzkammer (202) in einen Eintrittsbereich der Schmelzkammer (202) um einen unterschiedlichen Betrag gegenüber benachbarten Rippen (204) vorragen;
Erwärmen der Kunststoffabfälle im Erwärmungsbereich auf eine Temperatur, bei der zumindest ein Teil des Volumens von Kunststoffabfällen geschmolzen wird und eine fließfähige Kunststoffschmelze bildet;
Bewirken, dass die fließfähige Kunststoffschmelze vom Erwärmungsbereich unter dem Einfluss von Schwerkraft zum Auslass fließt.

12. Verfahren nach Anspruch 11, wobei die mehreren Rippen (204) verjüngte Vorderkanten haben, die in unterschiedlichen Höhen in dem Bereich enden, wo der Eintrittsbereich in den Erwärmungsbereich führt.

13. Verfahren nach Anspruch 11 oder Anspruch 12, das ferner umfasst, es der fließfähigen Kunststoffschmelze zu gestatten, in einen Kühlbereich zu fließen, wobei Gas entweichen kann, um so das Strömen der Kunststoffschmelze zu erleichtern und zu bewirken, dass die fließfähige Kunststoffschmelze erstarrt.

14. Verfahren nach Anspruch 13, wobei die fließfähige Kunststoffschmelze im Kühlbereich zu sterilen, geformten und stapelbaren erstarrten Körpern aus Kunststoffabfällen geformt wird.

15. Verfahren nach einem der Ansprüche 11 bis 14, das ferner das Zerkleinern der Kunststoffabfälle umfasst, bevor die Kunststoffabfälle in den Erwärmungsbereich eintreten.

16. Verfahren nach Anspruch 15, wobei das Zerkleinern der Kunststoffabfälle innerhalb des Eintrittsbereichs erfolgt.

17. Verfahren nach Anspruch 15 oder 16, wobei das Zerkleinern der Kunststoffabfälle durch Shreddern ausgeführt wird.

18. Verfahren nach einem der Ansprüche 11 bis 17, das ferner das Filtern von Rauchgas umfasst, das freigesetzt wird, wenn die Kunststoffabfälle erwärmt werden, und das Filtern von Luft außerhalb des Eintrittsbereichs, des Erwärmungsbereichs und des Kühlbereichs umfasst, indem Nichtgleichgewichts-Plasmatechnologie bei Luftdruck genutzt wird.

## Revendications

1. Appareil servant à traiter un volume de déchets de matières plastiques, l'appareil comportant :
une chambre de fusion (202) présentant une entrée de reprise de déchets de matières plastiques et une sortie située en aval de l'entrée, la chambre de fusion (202) définissant une zone chauffée qui reçoit et qui chauffe un volume de déchets de matières plastiques,
des moyens de chauffage (50, 51, 204) qui amènent la température de la chambre de fusion à un niveau prédéterminé et qui chauffent le volume de déchets de matières plastiques à une température à laquelle au moins une partie du volume de déchets de matières plastiques est fondue de manière à former une matière plastique fondue fluide,
**caractérisé en ce que**
les moyens de chauffage comprennent plusieurs ailettes (204) essentiellement planes qui s'étendent entre des parois opposées de la chambre de fusion (202) transversalement par rapport à l'écoulement de déchets de matières plastiques et agencées de telle sorte que leur sommet déborde à travers l'entrée de la chambre de fusion (202) jusque dans une zone d'entrée de la chambre de fusion (202) a un niveau différent de celui d'ailettes (204) adjacentes, de manière à former une surface thermique non uniforme au niveau de l'entrée de la chambre de fusion.

2. Appareil selon la revendication 1, dans lequel les différentes ailettes (204) sont disposées et construites de manière variable et sont présentées aux déchets de matières plastiques de manière à amener les déchets de matières plastiques à se verser de manière irrégulière dans la chambre de fusion (202).

3. Appareil selon la revendication 1 et/ou la revendication 2, dans lequel les ailettes (204) présentent un bord de tête situé à proximité de l'entrée de la chambre de fusion et un bord de queue situé à proximité de la sortie de la chambre de fusion.

4. Appareil selon la revendication 3, dans lequel le bord de tête d'ailettes (204) alternées se termine en des emplacements amont différents de ceux des bords de tête d'ailettes adjacentes (204), de manière à former une surface thermique non uniforme.

5. Appareil selon l'une quelconque des revendications 1 à 4, dans lequel des parois opposées de la chambre de fusion sont orientées vers des parois latérales opposées et dans lequel les ailettes (204) s'étendent entre les parois latérales et sont soutenues par ces dernières de manière libérable.

6. Appareil selon l'une quelconque des revendications 1 à 5, dans lequel au moins un élément chauffant à résistance électrique est incorporé dans les ailettes (204).

7. Appareil selon l'une quelconque des revendications 1 à 6, comprenant en outre un moyen de chambre de refroidissement disposé en aval de la sortie de la chambre de fusion et définissant une zone de refroidissement qui reçoit et refroidit les matières plastiques fondues fluides.

8. Appareil selon la revendication 6, dans lequel le moyen à chambre de refroidissement est défini par au moins une cavité de moule destinée à former un corps solide de déchets de matières plastiques et facultativement dans lequel la ou les cavités de moule ont la forme de discoïdes dont les dimensions sont sélectionnées pour permettre d'encapsuler des boissons par le corps de déchets de matières plastiques solidifiés dans la cavité du moule.

9. Appareil selon l'une quelconque des revendications 1 à 8, comprenant en outre un moyen pour fragmenter les déchets de matières plastiques avant que les déchets de matières plastiques pénètrent dans la chambre de fusion.

10. Appareil selon la revendication 9, dans lequel les moyens de fragmentation sont disposés en amont de l'entrée de la chambre de fusion.

11. Procédé de traitement d'un volume de déchets de matières plastiques, le procédé comportant les étapes qui consistent à :
prévoir un volume des déchets de matières plastiques qui comprend un ou plusieurs types de matières plastiques, le ou les types de matières plastiques présentant un point de fusion et un point d'éclair,
prévoir une zone de chauffage qui présente une entrée et une zone d'entrée dans laquelle le volume de déchets de matières plastiques peut être introduit et une sortie située en aval de l'entrée dans la direction d'écoulement des déchets de matières plastiques,
amener la chambre de chauffage à une température de travail prédéterminée, la température de travail étant sélectionnée de manière à être inférieure au point d'éclair du ou des types de matières plastiques de manière à éviter la carbonisation des déchets de matières plastiques,
permettre au volume de déchets de matières plastiques de tomber de la zone d'entrée, dans l'entrée et jusque dans la zone de chauffage sous l'action de la gravité,
former une surface thermique non uniforme au niveau de l'entrée de la zone de chauffage en prévoyant plusieurs ailettes (204) essentiellement planes qui s'étendent entre les parois opposées de la chambre de fusion (202), transversalement par rapport à l'écoulement des déchets de matières plastiques, pour faciliter l'écoulement des déchets de matières plastiques dans la zone de chauffage, les ailettes (204) étant agencées de telle sorte que leur sommet (204) déborde à travers l'entrée de la chambre de fusion (202) jusque dans la zone d'entrée de la chambre de fusion (202) d'un niveau différent pour des ailettes adjacentes (204),
chauffer les déchets de matières plastiques dans la zone de chauffage jusqu'à une température à laquelle au moins une partie du volume des déchets de matières plastiques est fondue de manière à former des matières plastiques fondues fluides et
amener les matières plastiques fondues fluides à s'écouler depuis la zone de chauffage jusqu'à la sortie sous l'effet de la gravité.

12. Procédé selon la revendication 11, dans lequel les différentes ailettes (204) présentent des bords de tête rétrécis qui se terminent à différentes hauteurs au niveau où la zone d'entrée conduit dans la zone de chauffage.

13. Procédé selon la revendication 11 ou la revendication 12, comprenant en outre l'étape qui consiste à amener les matières plastiques fondues fluides à s'écouler dans une zone de refroidissement, en même temps qu'un gaz est amené à s'échapper pour faciliter l'écoulement des matières plastiques fondues et amener les matières plastiques fondues et fluides à solidifier.

14. Procédé selon la revendication 13, dans lequel les matières plastiques fondues fluides sont transformées en corps de matières plastiques solidifiées stériles, moulés et empilables, dans la zone de refroidissement.

15. Procédé selon l'une quelconque des revendications 11 à 14, comportant en outre l'étape qui consiste à fragmenter les déchets de matières plastiques avant que les déchets de matières plastiques pénètrent dans la zone de chauffage.

16. Procédé selon la revendication 15, dans lequel la fragmentation des déchets de matières plastiques a lieu dans la zone d'entrée.

17. Procédé selon la revendication 15 ou la revendication 16, dans lequel la fragmentation des déchets de matières plastiques est réalisée par une action de déchiquetage.

18. Procédé selon l'une quelconque des revendications 11 à 17, comportant en outre l'étape qui consiste à filtrer les fumées libérées lorsque les déchets de matières plastiques sont chauffés et à filtrer l'air à l'extérieur de la zone d'entrée, de la zone de chauffage et de la zone de refroidissement en utilisant une technologie au plasma atmosphérique sous pression hors d'équilibre.
